# EUROPÄISCHE PATENTSCHRIFT

(11) **EP 2 504 597 B1**
(45) Veröffentlichungstag und Bekanntmachung des Hinweises auf die Patenterteilung: **14.05.2014**
(21) Anmeldenummer: 10803213.7
(22) Anmeldetag: 24.11.2010
(51) Int. Cl.: F16D 21/06, F16D 25/10

(54) **DREHMOMENTÜBERTRAGUNGSEINRICHTUNG**
TORQUE TRANSMISSION DEVICE
DISPOSITIF DE TRANSFERT DE COUPLE

(30) Priorität: 24.11.2009 DE 102009054333
(43) Veröffentlichungstag der Anmeldung: 03.10.2012
(73) Patentinhaber: Schaeffler Technologies GmbH & Co. KG, 91074 Herzogenaurach (DE)
(72) Erfinder: NÖHL, Oliver, 77830 Bühlertal (DE); ARNOLD, Johannes, 77855 Achern (DE); HOFSTETTER, Dirk, 76448 Durmersheim (DE)
(86) Internationale Anmeldenummer: PCT/DE2010/001379
(87) Internationale Veröffentlichungsnummer: WO 2011/063796

(56) Entgegenhaltungen:
- EP-A1- 1 609 654
- EP-A2- 1 174 633
- EP-A2- 1 548 313
- WO-A1-2009/152799
- WO-A2-2009/071399
- DE-A1- 10 155 458
- DE-A1-102007 019 604
- FR-A1- 2 814 516

## Beschreibung

Die vorliegende Erfindung betrifft eine Drehmomentübertagungseinrichtung in einem Antriebstrang eines Fahrzeuges zur Übertragung eines Drehmomentes zwischen einem Antrieb, wie Verbrennungsmotor oder Elektromotor, und einem Getriebe, wie Doppelkupplungsgetriebe, mit einem Drehschwingungsdämpfer, wie Zweimassenschwungrad, mit Eingangsflansch und Ausgangsflansch und zwischen diesen angeordneten Dämpfungseirichtungen, und einer Kupplungseinrichtung, wie einer nass laufenden Doppelkupplungseinrichtung, insbesondere mit radial geschachtelten Einzelkupplungen, mit einem Eingangskorb und einer Ausgangsseite und einem zwischen diesen angeordneten Reiblamellenpaket.

Aus der DE 10 2006 049 731 ist eine derartige Doppelnasskupplung bekannt. Bei dieser bekannten Doppelkupplung ist eine von der Betätigungseinrichtung erzeugte Betätigungskraft über den eingangsseitigen Lamellenträger, ein Stützlager und einen an der Kupplungsglocke fest angebundenen Kupplungsdeckel abgestützt. Hierfür sind der eingangsseitige Lamellenträger, das Stützlager und der Kupplungsdeckel entsprechend stark zu dimensionieren, wobei die jeweilige Betätigungskraft von dem zu übertragenden Drehmoment abhängt. Bei steigendem Drehmoment ist dementsprechend eine entsprechend höhere Betätigungskraft und eine entsprechend stärke Dimensionierung, insbesondere des Kupplungsdeckels, notwendig. Auch die Lagerung der Ausgangsseite des ZMS und der Eingangsseite der Kupplung erfolgt über diesen Kupplungsdeckel. Die Doppelnasskupplung ist hebelbetätigt. Die Betätigungseinrichtung weist Drehhebel auf, welche elektrisch oder hydraulisch betätigt werden können.

Aus der DE 10 2007 019604 A1 ist eine derartige Doppelnasskupplung bekannt, wobei das Zweimassenschwungrad sich im Nassraum befindet.

Es ist eine Aufgabe der vorliegenden Erfindung, eine Drehmomentübertagungseinrichtung der Eingangs genannten Art mit einem montage- und/oder fertigungstechnisch weiter optimierten Design anzugeben.

Dieser Aufgabe wird erfindungsgemäß gelöst durch eine Drehmomentübertagungseinrichtung mit den Merkmalen zumindest des unabhängigen Patentanspruchs.

Bevorzugte Ausführungsbeispiele dieser Drehmomentübertagungseinrichtung sind Gegenstand der jeweiligen abhängigen Patentansprüche.

Die vorliegende Erfindung wird nachfolgend anhand bevorzugter Ausführungsbeispiele in Verbindung mit den zugehörigen Figuren näher erläutert. In diesen zeigen:
- Fig. 1: Ein Halbschnitt einer Doppelkupplung gemäß einem ersten Ausführungsbeispiel, nicht Teil der Erfindung,
- Fig. 2: eine schematische Darstellung des internen Kraftflusses der radial innen angeordneten Lamellenkupplung K2 bei deren Betätigung für die Doppelkupplung nach Fig. 1,
- Fig. 3: eine schematische Darstellung der Lagerung der Doppelkupplung nach Fig. 1 und Fig. 2,
- Fig. 4: ein Halbschnitt der Doppelkupplung nach einem weiteren Ausführungsbeispiel in einen spielfreien Lamellenträger, nicht Teil der Erfindung,
- Fig. 5 und 6: schematische Darstellungen betreffend gebauter Lamellenträger,
- Fig. 7: ein Halbschnitt der Doppelkupplung nach einem weiteren Ausführungsbeispiel mit intern geschlossenem Kraftfluss und Betätigung über Doppelringkolben ("CSC"), nicht Teil der Erfindung,
- Fig. 8: ein Halbschnitt der Doppelkupplung nach einem weiteren Ausführungsbeispiel mit einer getriebewellenfesten Doppelnasskupplung mit Axialspielausgleich in der Ölzuführung, nicht Teil der Erfindung,
- Fig. 9: ein Halbschnitt der Doppelkupplung nach einem weiteren Ausführungsbeispiel mit einer axial schwimmend gelagerten Doppelnasskupplung mit radialer Ölzuführung, nicht Teil der Erfindung,
- Fig. 10: ein Halbschnitt der Doppelkupplung nach einem weiteren Ausführungsbeispiel mit einer weiteren axial schwimmend gelagerten Doppelkupplung hier mit einer Flexplatelagerung, nicht Teil der Erfindung,
- Fig. 11: ein Halbschnitt der Doppelkupplung nach einem weiteren Ausführungsbeispiel mit einer weiteren axial schwimmend gelagerten Doppelkupplung hier mit einer Flexplatelagerung und einem Pilot, nicht Teil der Erfindung,

- Fig. 12: ein Halbschnitt der Doppelkupplung nach einem weiteren Ausführungsbeispiel mit einem trockenen ZMS, nicht Teil der Erfindung,
- Fig. 13: ein Halbschnitt der Doppelkupplung nach einem weiteren Ausführungsbeispiel mit einem trockenen ZMS, wobei das Axiallager zwischen dem Außenlamellenträger der äußeren Kupplung K1 und dem Kupplungsdeckel weggelassen ist, nicht Teil der Erfindung,
- Fig. 14: ein Halbschnitt der Doppelkupplung nach einem weiteren Ausführungsbeispiel mit intern geschlossenem Kraftfluss und nasslaufendem ZMS und Fliehkraftpendel ("FKP"), nicht Teil der Erfindung,
- Fig. 15: ein Halbschnitt der Doppelkupplung nach einem weiteren Ausführungsbeispiel nicht Teil der Erfindung, mit intern geschlossenem Kraftfluss und nasslaufendem ZMS und Fliehkraftpendel ("FKP"), wobei die Blechpratze bzw. Spannpratze nach Fig. 14 weggelassen wurde und
- Fig. 16: ein Halbschnitt der Doppelkupplung nach einem erfindungsgemäßen Ausführungsbeispiel, wobei der Kupplungskorb der radial äußeren Einzelkupplung mit dem Ausgangsflansch des ZMS eine axiale Steckverzahnung bildet, und wobei die Doppelkupplung eine Anschlußnabe aufweist, welche zugleich eine Verbindungsfunktion zwischen Kurbelwelle und ZMS und eine Lagerungsfunktion für die Doppelkupplung übernimmt.

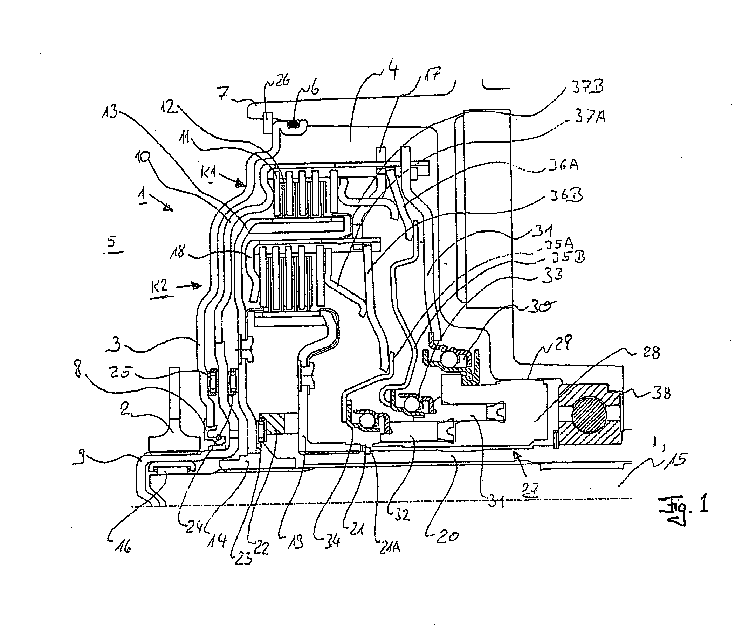

Fig. 1 zeigt eine Doppelkupplung 1 bestehend aus zwei radial geschachtelten, nasslaufenden Lamellenkupplungen K1 und K2. Kupplung K1 ist dabei radial außen und Kupplung K2 ist dabei radial innen angeordnet. Die Doppelkupplung 1 wird von einer Abtriebsnabe 2 eines der Kupplung 1 vorgeschalteten Zweimassenschwungrades (nicht im Einzelnen gezeigt), nachfolgend auch als "ZMS" bezeichnet, als einem Beispiel eines Drehschwingungsdämpfers, angetrieben. Zwischen diesem ZMS und der Doppelkupplung 1 befindet sich ein Kupplungsdeckel 3, der einen Nassraum 4 von einem Trockenraum 5 trennt. Eine statische Abdichtung 6 des Kupplungsdeckels 3 hin zu einem Getriebegehäuse 7 eines im Antriebstrang nachfolgend angeordneten Getriebes (nicht im Einzelnen gezeigt) erfolgt vorzugsweise über einen O-Ring 6 oder ein sonstiges statisches Dichtelement. Zur Doppelkupplung 1 hin erfolgt die Abdichtung vorzugsweise über einen Radialwellendichtring 8 als einem dynamischen Dichtelement.

Die Abtriebsnabe 2 des ZMS ist über eine axiale Steckverzahnung mit einer Kupplungsnabe 9 drehfest verbunden. Die Kupplungsnabe 9 ist verbunden mit dem eingangsseitigen Lamellenträger 10 der in der radialen Schachtelung außen angeordneten Kupplung K1. Gemäß einem bevorzugten Ausführungsbeispiel sind Kupplungsnabe 9 und eingangsseitiger Lamellenträger 10 (nachfolgend auch vereinfachend als "Kupplungskorb" bezeichnet) einstückig ausgebildet, d.h. vorzugsweise durch spanloses Umformen aus einem gemeinsamen Blech geformt, wobei später spanlos oder spanabnehmend eine axiale Verzahnung im Bereich der Nabe und im Bereich des Kupplungskorbes ausgebildet wird.

Der eingangsseitige Lamellenträger 10 der Lamellenkupplung K1 (=der äußere Eingangslamellenträger 10) und die mit diesem drehfest verbundene Kupplungsnabe 9 sind über ein Radiallager 16 an der ersten Getriebeeingangswelle 15 (die als Vollwelle ausgebildet ist) radial abgestützt.

Der eingangsseitige Lamellenträger 10 umfasst Verzahnungsbereiche an denen eingangsseitige Lamellen des Lamellenpakets der äußeren Lamellenkupplung K1 eingehängt sind, so dass die äußeren eingangsseitigen Lamellen 11 drehfest und axial verlagerbar angeordnet sind. Die äußeren eingangsseitigen Lamellen 11 sind alternierend zu äußeren abtriebsseitigen Lamellen 12 angeordnet, wobei die äußeren eingangsseitigen Lamellen 11 und die alternierend angeordneten äußeren abtriebsseitigen Lamellen 12 gemeinsam das Lamellenpaket der Kupplung K1 bilden. Die äußeren abtriebsseitigen Lamellen 12 sind drehfest und axial verlagerbar mit einem äußeren abtriebsseitigen Lamellenträger 13 der äußeren Lamellenkupplung K1 verbunden. Der äußere abtriebsseitige Lamellenträger 13 der Lamellenkupplung K1 umfasst eine Nabe 14, welche mit der ersten Getriebeeingangswelle 15 eines (nicht im Einzelnen gezeigten) Doppelkupplungsgetriebes verbunden ist.

Der eingangsseitige Lamellenträger 10 der äußeren Lamellenkupplung K1 ist über das Verbindungsblech 17, welches in diesem eingehängt ist, mit einem inneren eingangsseitigen Lamellenträger 18 der radial innen angeordneten Lamellenkupplung K2 verbunden. Die inneren eingangsseitigen Lamellen der radial innen angeordneten Lamellenkupplung K2 sind in einem Verzahnungsbereich des inneren Eingangslamellenträgers drehfest und axial verlagerbar eingehängt. Diese inneren eingangsseitigen Lamellen der radial innen angeordneten Kupplung K2 sind alternierend zu inneren ausgangsseitigen Lamellen angeordnet, welche an einem inneren abtriebsseitigen Lamellenträger 19 der Lamellenkupplung K2 drehfest und axial verlagerbar angeordnet sind. Der innere abtriebsseitige Lamellenträger 19 weist einen Nabenbereich auf, an welchem der innere abtriebsseitige Lamellenträger 19 mit einer zweiten Getriebeeingangswelle 20 (die als Hohlwelle ausgebildet ist) verbunden ist.

Der innere abtriebsseitige Lamellenträger 19 der radial innen angeordneten Lamellenkupplung K2 wird über eine Wellfeder 21 (und falls konstruktionsbedingt notwendig auch über ein Verbindungsstück 22) unter Zwischenlage eines Axial-Lagers 23 gegen den äußeren ausgangsseitigen Lamellenträger 13 der radial außen angeordneten Lamellenkupplung K1 gedrückt. Anstelle einer Wellfeder könnten auch andere Federelemente wie z.B. ein Tellerfederpaket verwendet werden. Der äußere abtriebsseitige Lamellenträger 13 der radial außen angeordneten Lamellenkupplung K1 wird wiederum unter Zwischenlage des weiteren Axial-Lagers 24 gegen den äußeren eingangsseitigen Lamellenträger 10 der radial außen angeordneten Lamellenkupplung K1 bzw. gegen die Kupplungsnabe 9 ist gedrückt. Der äußere eingangsseitige Lamellenträger 10 der radial außen angeordneten Lamellenkupplung K1 wiederum wird unter Zwischenlage eines weiteren Axial-Lagers 25 gegen den Kupplungsdeckel 3 gedrückt, welcher sich über das Sicherungselement 26 am Gehäuse 7 des Getriebes abstützt. Wie insbesondere Fig. 1 entnehmbar, sind die Lager 23, 24, 25 vorzugsweise als Axial(nadel)lager ausgebildet. Das Verbindungsstück 22 ist derart ausgebildet, dass ein Strömungsweg für Kühlöl zwischen den ausgangsseitigen Lamellenträgern ermöglichst ist.

Die Getriebeeingangswellen 15, 20 sind vorliegend koaxial und ineinander geschachtelt angeordnet, wobei die äußere Getriebeeingangswelle 20 über ein Stützlager 38 im Gehäuse 7 abgestützt ist, und wobei die innere Getriebeeingangswelle 15 über eine Lagerung in der äußeren Hohlwelle 20 abgestützt ist.

Die Doppelkupplung 1 umfasst weiterhin eine Betätigungseinrichtung 27, die als zentraler Kupplungsausrücker für beide Lamellenkupplungen K1 und K2 ausgebildet ist, mit einem Gehäuse 28, welches über einen Lagerballus 29 am Gehäuse 7 des Getriebes abgestützt ist. Die vorliegend als Doppelringkolbeneinrücker (auch bezeichnet als Doppel CSC, wobei CSC für ,Concentric Slave Cylinder' steht) ausgebildete Betätigungseinrichtung 27 umfasst zwei kreisringförmige und konzentrisch zueinander angeordnete Kolben 31, 32. Die Bezeichnungen "Ausrücker" bzw. "Einrücker" sind hier nicht einschränkend zu verstehen, sondern beruhen eher auf einer in diesem technischen Bereich üblichen Sprachregelung. Die Funktion der Betätigungseinrichtung als Kupplungs-"Einrücker" bzw. -"Ausrücker" ist nur dadurch bedingt, dass eine "normally-open" oder eine "normally-closed" Kupplung zu betätigen ist, also ob die Kupplung im betätigungskraftfreien Zustand offen oder geschlossen ist. Die Ausbildung der Betätigungseinrichtung ist-hiervon im Wesentlichen unbeeinflusst, da zur Änderung von normally open auf normally closed nur die Auflagerungpunkte der Hebelfeder bzw. Tellerfeder angepasst werden müssen.

Die in den Figuren 1 bis 4 dargestellten Variante der Betätigungseinrichtung 27 zeigt eine Ausführungsform, in welcher die beiden kreisringförmigen Kolben 31, 32 aufeinander abgleiten. Damit stellt der Innendurchmesser des äußeren Kolbens 31 der Kupplung K1 gleichzeitig die Dichtfläche für den inneren Kolben der Kupplung K2 dar. Alternativ ist auch eine Ausführungsform denkbar, bei der die beiden Kolben durch einen kreisringförmigen Steg voneinander getrennt sind, auf welchem die Dichtungen gleiten können. Mit einer solchen alternativen Ausführungsform kann eine gegenseitige Beeinflussung der Kolben 31, 32 durch die Dichtung ausgeschlossen werden.

Die vorstehend beschriebenen möglichen Ausgestaltungen der Betätigungseinrichtung 27 sind aber wiederum ausschließlich als Beispiele einer Vielzahl an möglichen Ausgestaltungen der Betätigungseinrichtung zu verstehen. So kann anstelle eines Ringskolbens auch eine andere Querschnittsform und/oder mehrere einzelne Kolben entlang des Umfangs verteilt vorgesehen sein. Ebenso kann ein elektrischer bzw. elektro-mechanischer Ausrücker vorgesehen werden anstelle der vorliegenden Kolben/Zylinder-Einheiten. Zudem könnten auch mechanische Betätigungseinrichtungen insbesondere hebelbetätigte Einrichtungen vorgesehen sein.

Die Kolbendichtungen der Ringkolben 31, 32 sind vorliegend als Elastomerdichtungen ausgeführt, die über formschlüssige Verbindungen mit den jeweiligen Kolben verbunden sind. Als formschlüssige Verbindung ist z. B. eine konische Nut im Kolben denkbar, in welche eine entsprechende Feder der Elastomerdichtung oder die Elastomerdichtung selbst eingeknüpft wird. Alternativ sind auch eingelegte Dichtungen aus z. B. PTFE oder an die Kolben direkt angespritzte Elastomerdichtungen denkbar.

Die ringförmigen Kolben 31, 32 werden von dem Einrückgehäuse 28 aufgenommen, wobei Bohrungen im Einrückergehäuse 28, welche in den Figuren nicht im Einzelnen gezeigt sind dazu dienen, die Kolben über Drucköl zu betätigen.

Zusätzlich übernimmt das Einrückergehäuse 28 die radiale Positionierung der Kolben über den Lagerballus 29 innerhalb der Kupplungsglocke 4.

Jede der Betätigungseinheiten der Betätigungseinrichtung 27 ist über ein Betätigungslager 33, 34 mit einer Kraftübertragungseinrichtung verbunden, mit der die jeweilige Betätigungskraft auf die jeweiligen Lamellenkupplung K1, K2 übertragen wird. Vorliegend umfasst jede der Kraftübertragungseinrichtungen einen im Wesentlichen starren Drucktopf 35A, 35B, welcher am jeweiligen Lager 33, 34 anliegt. Hierbei sei angemerkt, dass selbstverständlich jeder Drucktopf eine gewisse Elastizität aufweist, welche zu einer gewissen Federwirkung führt. Bezüglich der vorliegenden Betätigungskräfte der Doppelkupplung können die Drucktöpfe aber als "im Wesentlichen starr" angenommen werden. Zudem umfasst jede der Kraftübertragungseinrichtungen eine Hebelfeder 36A, 36B, welche am jeweiligen Drucktopf 35A, 35B anliegt. Die Hebelfedern 36A, 36B sind jeweils am zugehörigen Lamellenträger der entsprechenden Lamellenkupplung K1, K2 eingehängt, wobei dieser Einhängungspunkt den jeweiligen Drehpunkt für die Hebelfeder bildet. Über das Hebelverhältnis dieser Hebelfeder erfolgt eine Kraftübersetzung der von den Betätigungseinheiten erzeugten Betätigungskräfte. Jede der Kraftübertragungseinrichtungen umfasst zudem ein Druckstück 37A, 37B, welches an der zugehörigen Hebelfeder 36A, 36B anliegt und in Wirkverbindung mit den Lamellen der Lamellenpakete der jeweiligen Lamellenkupplung K1, K2 ist. Die Druckstücke übertragen die Betätigungskräfte auf die Lamellenpakete der Lamellenkupplungen K1 und K2. Die Druckstücke 37A, 37B sind in einem radial äußeren Bereich in die Verzahnung des jeweiligen eingangsseitigen Lamellenträgers axial verschiebbar eingehängt und werden durch die Verzahnung in radialer Richtung zentriert. Anstelle dieser Hebelübersetzungen der Betätigungskräfte kann auch eine direkte Betätigung über Drucktöpfe vorgesehen sein, die zwischen den Betätigungslagern und den Lamellenpaketen angeordnet sind, also bei einem Hebelverhältnis von 1:1.

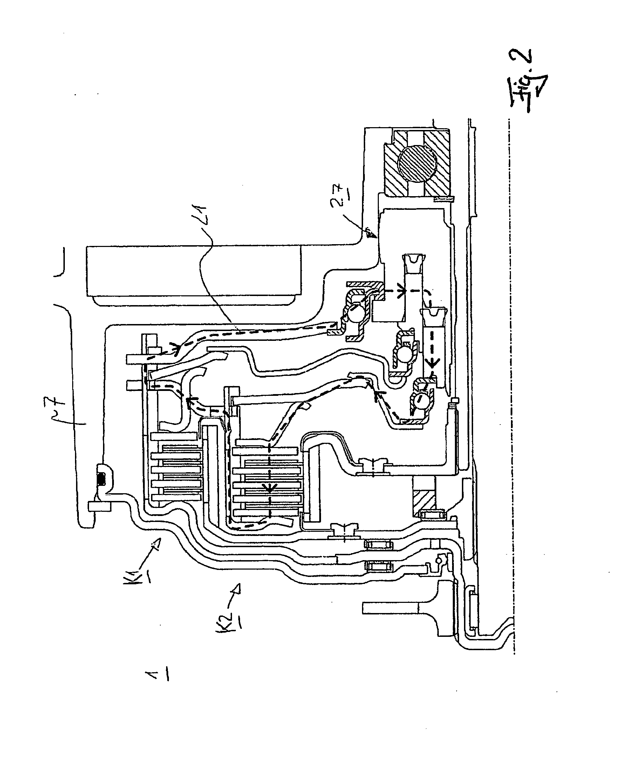

Am Gehäuse 28 der Betätigungseinrichtung 27 ist in einem äußeren Mantelbereich ein Stützlager 30 (auch als "Deckellager" bezeichnet) angeordnet, das über einen Zugtopf 31 mit dem eingangsseitigen Lamellenträger 10 ("Kupplungskorb") der radial äußeren Lamellenkupplung K1 verbunden ist. Dabei stützt sich ein Innenring des Stützlagers/ Deckellagers über einen am Gehäuse 28 ausgebildeten Bund am Gehäuse 28 einerseits und ein Außenring des Stützlagers/Deckellagers am Zugtopf 31 andererseits in der Art und Weise ab, dass eine Kraft vom eingangsseitigen Lamellenträger 10 der Lamellenkupplung K1 zurückgeführte Betätigungskraft an das Gehäuse 28 übertragbar ist. Dies ist in Fig. 2 über die gestrichelte Linie dargestellt.

Das Stützlager 30, welches die Betätigungskraft auf das Einrückergehäuse 28 zusammen mit dem Zugtopf 31 zurückführt, wird vorzugsweise über eine Bajonettverbindung mit dem Einrückergehäuse 28 verbunden.

Bei Druckbeaufschlagung eines der Kolben bzw. beider Kolben bewegt sich dieser bzw. bewegen sich diese in Richtung Kurbelwelle (in Fig. 1 links von der Abtriebsnabe des ZMS angeordnet) und betätigt dabei über die Mitnahme des zugehörigen Drucktopfes 35A, 35B die jeweilige Hebelfeder 36A, 36B, welche wiederum über das zugehörige Druckstück 37A, 37B die Betätigungskraft in das Lamellenpaket einleitet. Die Betätigungskraft wird bei der radial innen angeordneten Kupplung K2 über den Eingangslamellenträger 18 und das Verbindungsstück 17 (auch als Verbindungsblech bezeichnet) zwischen eingangsseitige Lamellenträger der radial innen angeordneten Lamellenkupplung K2 und dem eingangsseitigen Lamellenträger 10 der radial außen angeordneten Lamellenkupplung K1 übertragen. Der eingangsseitige Lamellenträger 10 wiederum überträgt die Betätigungskraft auf den Zugtopf 31, welcher über das Stützlager 30 mit dem Einrückergehäuse 28 verbunden ist.

Bei der radial außen angeordneten Kupplung K1 wird die eingeleitete Betätigungskraft direkt über den Eingangslamellenträger 10 auf den Zugtopf 31 und damit über das Stützlager 30 an das Einrückergehäuse 28 zurückgeführt.

Das vorliegende Doppel-CSC erzeugt also eine auf die Drucktöpfe in Richtung Antriebseinheit wirkende Druckkraft, wobei im Gehäuse 28 eine entsprechend große und entgegengesetzt gerichtete Gegenkraft erzeugt wird, und wobei über den Zugtopf und das Stützlager wieder die Betätigungskraft mit gleichem Betrag und gleicher Richtung an das Gehäuse zurückgeführt wird. Dadurch, dass das Stützlager 30 die Betätigungskraft auf das Einrückergehäuse 28 überträgt, wird also der interne Kraftfluss innerhalb der Kupplung 1 geschlossen. Dieser Verlauf der Betätigungskraft zur Betätigung der Lamellenkupplung K2 ist in Fig. 2 über die gestrichelte Linie L1 schematisch dargestellt. Vorliegend werden also zur Betätigung der Lamellenkupplungen K1 und K2 keine äußeren Kräfte bei radialer Ölzuführ bzw. nahezu keine äußeren Kräfte bei axialer Ölzufuhr frei, weshalb die Kupplung 1 keine Abstützung der Betätigungskraft an der Kupplungsglocke oder motorseitig benötigt.

Das Hydraulikmedium (Betätigungsmodul) wird der Betätigungseinrichtung über Fittings, die mit der Kupplungsglocke verbunden sind, zugeführt.

Das Einrückergehäuse 28 weist innerhalb der Kupplungsglocke 4 eine Drehmomentabstützung auf, damit eine Lagerreibung innerhalb des Stützlagers 30 nicht zu einer Rotation des Einrückergehäuses 28 führen kann. Als Momenentabstützung können hierbei die Fittings zur Druckzuführung verwendet werden. Alternativ kann auch eine separate Abstützung per Zapfen oder ähnlichem Bauteil vorgesehen sein, welches bei der Montage der Kupplung in den Kupplungsglockenboden eingreift.

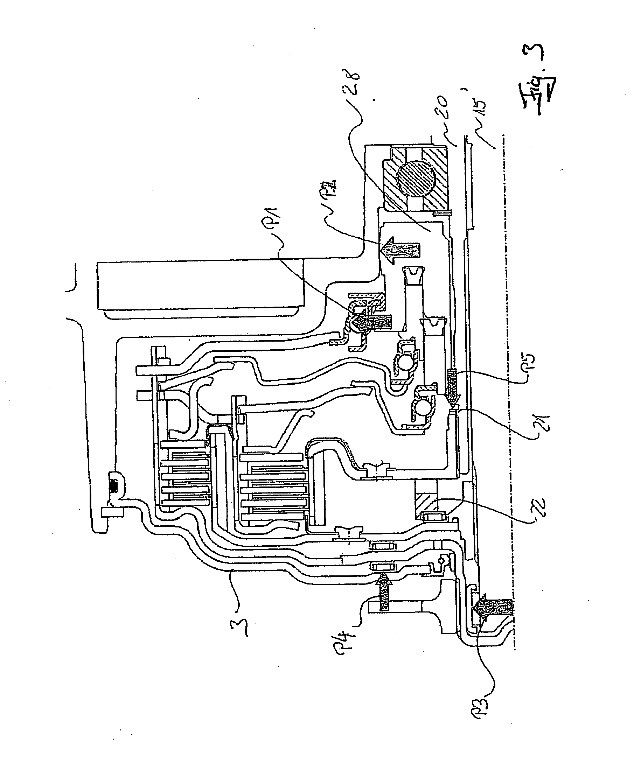

In Fig. 3 ist die radiale und axiale Lagerung der Kupplung 1 gemäß dem in Fig. 1 gezeigten Ausführungsbeispiel über Pfeile P1 bis P5 schematisch dargestellt.

In radialer Richtung betrachtet sind alle mit Motordrehzahl rotierenden Komponenten der Doppelkupplung 1 getriebeseitig auf dem Einrückergehäuse 28 und motorseitig auf der Vollwelle 15 gelagert. Pfeil P1 stellt hierbei die Abstützung des eingangsseitigen Lamellenträgers 10 der radial außen angeordneten Lamellenkupplung K1 und der mit diesem Bauteil verbundenen Bauteile am Einrückergehäuse 28 dar. Das Einrückergehäuse 28 wiederum stützt sich über den Lagerballus 29 am Glockenboden (am Getriebegehäuse) ab, wie durch Pfeil P2 dargestellt. Der Lagerballus 29 stellt den Winkelausgleich zwischen Vollwelle 15 und getriebeseitiger Lagerbasis dar. Die Vollwelle 15 stützt motorseitig über das Lager 16 den eingangsseitigen Lamellenträger 10 der radial außen angeordnet angeordneten Kupplung K1 dar, wie über Pfeil P3 dargestellt. Die mit den jeweiligen Getriebeeingangsdrehzahlen von Voll- und Hohlwelle 15, 20 rotierenden Kupplungskomponenten 14, 19 sind über die auf den Wellen sitzenden Naben/Nabenbereiche radial gelagert. Der Lagerballus 29 kann durch eine radiale Abstützung auf der äußeren Getriebeeingangswelle, vorzugsweise über ein auf der äußeren Getriebeeingangswelle angeordnetes Radialnadellager, ersetzt werden.

Axial betrachtet stützt sich die Kupplung 1 am Kupplungsdeckel 3 ab, wobei die Abstützkraft von der Wellfeder 21 aufgebracht wird. Die axialen Lagerungspunkte sind über die Pfeile P4 und P5 angedeutet. Dabei stützt sich die Wellfeder 21 auf einem an der Hohlwelle 20 angebrachten Sicherungsring und der Nabe des ausgangsseitigen Lamellenträgers 19 der Lamellenkupplung K2 ab. Der abtriebsseitige Lamellenträger 19 der Lamellenkupplung K2 leitet diese Axialkraft über eine Distanzscheibe 22 auf ein sich auf dem abtriebsseitigen Lamellenträger 13 bzw. dessen Nabenbereich 14 befindendes Axialnadellager 23. Der abtriebsseitige Lamellenträger 13 der Lamellenkupplung K1 stützt sich wiederum über ein Axialnadellager 24 auf den eingangsseitigen Lamellenträger 10 der Kupplung K1 ab, welches sich über ein weiteres Nadellager 25 am Kupplungsdeckel 3 abstützt. Das Kupplungssystem 1 ist damit immer am Kupplungsdeckel 3 ausgerichtet. Über die Wellfeder 21 können Axialschwingungen und Toleranzen ausgeglichen werden. Die Axialnadellager 23, 24, 25 können auch durch Anlaufscheiben ersetzt werden. Die vorstehend beschriebene Art der Axiallagerung der vorliegenden Kupplung 1 kann auch unabhängig von dem vorstehend beschriebenen intern geschlossenen Kraftfluss, also auch bei anderen Arten des Betätigungskraftflusses verwendet werden und stellt eine separat anwendbare Lösung allgemein für Doppel(nass)kupplungen dar.

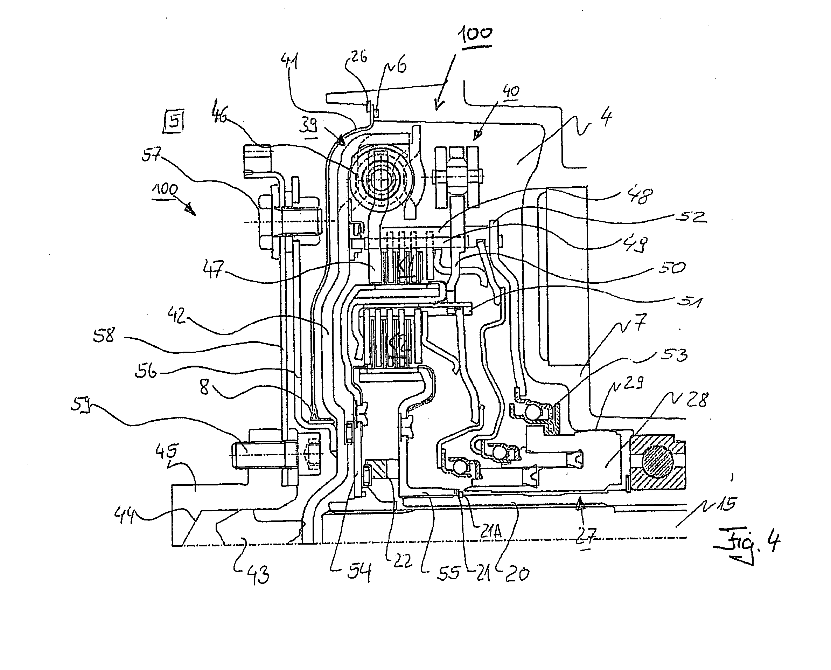

In Fig. 4 ist ein weiteres Ausführungsbeispiel der vorliegenden Drehmomentübertragungseinrichtung mit einer Doppelkupplungseinrichtung gezeigt, welche hinsichtlich des Betätigungskraftflusskonzeptes vollständig den bereits vorstehend erläuterten Ausführungsbeispielen entspricht. So stimmen sämtliche vorstehend ausgeführten Merkmale betreffend der Betätigungseinrichtung zwischen den Ausführungsbeispielen gemäß Fig. 1 bis 3 und gemäß Fig. 4 überein. Weiterhin ist vorliegend wiederum ein Lagerballus vorgesehen, um das Betätigungsgehäuse 28 am Getriebegehäuse 7 radial abzustützen und einen Achsversatz auszugleichen. Das Ausführungsbeispiel nach Fig. 4 unterscheidet sich vom vorstehenden Ausführungsbeispiel jedoch in den zur Dämpfung der vom Verbrennungsmotor kommenden Drehungleichförmigkeiten verwendeten Elemente: ZMS und/ oder Fliehkraftpendel. So sind gemäß dem Ausführungsbeispiel nach Fig. 4 sowohl das ZMS 39 als auch ein Fliehkraftpendel 40 in der Kupplungsglocke 4, d.h. im Naßraum, angeordnet, welcher durch einen Kupplungsdeckel 41 gegenüber dem Trockenraum abgrenzt ist. Der Kupplungsdeckel 41 ist vorliegend nicht zur Axiallagerung der Kupplung vorgesehen. Vielmehr stellt er ausschließlich die Trennung zwischen Nassraum 4 und Trockenraum 5 über die Dichtungseinrichtungen 6 sowie 8 dar.

Das ZMS 39 umfasst ein primärseitiges ZMS-Blech 42, welches vorliegend topfartig ausgebildet ist und in seinem radial inneren Bereich ein Pilotzapfen 43 angeordnet ist, welcher in eine Ausnehmung 44 der Kurbelwelle 45 eingreift und das primärseitige ZMS-Blech während der Montage zentriert. In seinem radial äußeren Bereich weist das primärseitige ZMS-Blech 42 taschenförmige Bereiche auf, in denen Federelemente aufgenommen sind, wobei die nicht in Kontakt zu diesen Taschen stehenden Endbereiche der Energiespeicher 46 mit einem sekundärseitigen ZMS-Flansch 47 in Wirkverbindung stehen. Der sekundärseitige ZMS-Flansch 47 ist mit einem im wesentlichen zylindrischen Verzahnungsblech 48 über die Nieten 49 verbunden, wobei das Verzahnungsblech 48 als eingangsseitiger Lamellenträger (=Kupplungskorb) der radial außen angeordneten Kupplung K1 dient.

Der eingangsseitige Lamellenträger 48 ist über das Verbindungsblech 50 mit dem eingangsseitigen Lamellenträger 51 der radial innen angeordneten Lamellenkupplung K2 verbunden. Dieses Verbindungsblech 50 ist außerdem mit dem Fliehkraftpendel 40 verbunden (vorliegend: einstückig ausgebildet), so dass das ZMS 39 und das Fliehkraftpendel 40 gemeinsam mit dem Verzahnungsblech 48 verbunden sind (vorzugsweise über die Nieten 49) und dementsprechend parallel zueinander geschalten sind.

Das Verzahnungsblech 48 ist über den Zugtopf 52 mit dem Stützlager 53 (=Deckellager) verbunden, welches am Einrückergehäuse 28 (wie schon vorstehend beschrieben) angeordnet ist.

Der abtriebsseitige Lamellenträger 54 der Lamellenkupplung K1 ist an der Hohlwelle 15 drehfest angeordnet. Der abtriebsseitige Lamellenträger 55 der Lamellenkupplung K2 ist an der Hohlwelle 20 drehfest angeordnet. Der abtriebsseitige Lamellenträger 54 der Lamellenkupplung K2 ist über die Wellfeder 21 in Verbindung mit dem Sicherungselement 21A und dem Verbindungselement 22 gegen den abtriebsseitigen Lamellenträger 54 unter Zwischenlage eines Axiallagers vorbelastet. Der abtriebsseitige Lamellenträger 54 der Lamellenkupplung K1 ist unter Zwischenlage eines weiteren Axiallagers gegen den primärseitigen ZMS-Flansch 42 (auch als ,ZMS- Blech' bezeichnet) belastet. Am primärseitigen ZMS-Blech 42 ist eine Drive plate 56 fest angeordnet, welches über eine Verschraubung 57 mit einer Flexplate 58 verbunden ist, wobei die Flexplate über eine weitere Verschraubung 59 mit der Kurbelwelle 45 verbunden ist.

Die Betätigungseinrichtung 27 umfasst wiederum Betätigungseinheiten, welche vorliegend als Kolben/zylinder-Einheiten ausgebildet sind, welche jeweils über die Kraftübertragungseinrichtungen bestehend aus Drucktopf, Hebelfeder und Druckstück auf die jeweiligen Lamellenpakete der Lamellenkupplung K1 und K2 wirken, wie bereits vorstehend beschrieben.

Die Drehmomentübertragungseinrichtung mit der vorstehend beschriebenen Doppelkupplung 100 gemäß Fig. 4 ist über die Flex-plate 58 in Verbindung mit der Drive-plate 56 an die Kurbelwelle 45 des Verbrennungsmotors angebunden. Drive-plate und Flexplate sind über die Schraubverbindung 57 miteinander verbunden. Die Drive-plate 56 und das primärseitige ZMS-Blech 42 sind direkt, vorzugsweise öldicht, beispielsweise durch Schweißen, miteinander verbunden und nehmen den axial dazwischen geschalteten Kupplungsdeckel 41 mit Radialwellendichtring 8 auf. Das primärseitige ZMS-Blech 42 ist radial innerhalb der Verbindung mit der Drive-plate 56 durchgängig geschlossen, so dass das primärseitige ZMS-Blech 42 die Abdichtung des Naßraumes in dem Bereich übernimmt, der von der vergleichsweise großen Aussparung im Deckel freigelassen wird.

Die primärseitigen Komponenten des ZMS sind aus Montagegründen über einen Pilotzapfen 43 direkt auf der Kurbelwelle 45 gelagert. Der Pilotzapfen ist jedoch nur als optionales Merkmal zu verstehen, das die Montage erleichtert.

Der sekundärseitige Flansch 47 des ZMS stellt vorliegend gleichzeitig die Endlamelle der Lamellenkupplung K1 dar.

Der eingangsseitige Lamellenträger 48 der Lamellenkupplung K1 ist (wie bereits beschrieben) als vernietete Variante ausgeführt.

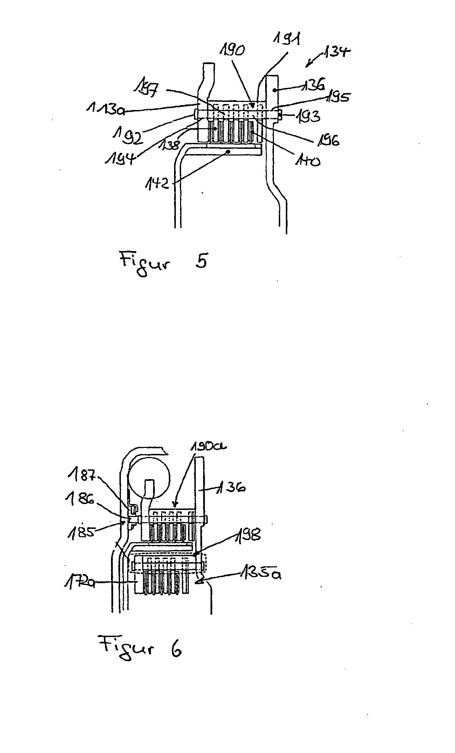

Ausführungsbeispiele eines vernieteten Lamellenträgers sind in den Fig. 5 und 6 dargestellt.

Figur 5 zeigt einen gebauten Lamellenträger 134 (vergleichbar dem eingangsseitigen Lamellenträger der Figur 4) im Detail als Schnittdarstellung. Der Lamellenträger 134 wird aus dem Flanschteil 113a, der Trägerscheibe 136 und axial dazwischen angeordneten, über den Umfang verteilten Verbindungselementen 190 gebildet. In dem gezeigten Ausführungsbeispiel sind die Verbindungselemente 190 aus vorgebogenen Blechteilen 191 gebildet, die sich axial erstreckende Nietzapfen 192, 193 aufweisen, die durch entsprechende Öffnungen 194, 195 in dem Flanschteil 113a beziehungsweise Trägerscheibe 136 geführt und von außen gegen diese vernietet sind. Die in Umfangsrichtung weisenden Enden der Blechteile 191 sind zur Ausbildung von Zahnflanken 196 nach radial innen abgekantet oder gebogen, so dass sich im Querschnitt der Blechteile 191 ein Zahnflankenprofil ausbildet, an dem die Lamellen 138 eingehängt sind, die hierzu über ein komplementäres Außenprofil 197 verfügen, so dass die Lamellen 138 an dem Lamellenträger 134 zentriert sind und das an dem Lamellenträger 134 anliegende Drehmoment auf die Lamellen 138 übertragen wird. Die Lamellen 138 sind abwechselnd mit den Reiblamellen 140, die in den ausgangsseitigen Lamellenträger 142 drehfest und axial begrenzt verlagerbar eingehängt sind, geschichtet.

Figur 6 zeigt eine zu dem vorstehend beschriebenen Lamellenträger alternative Ausführung in Form des Lamellenträgers 135a in gebauter Ausführung. Der Lamellenträger 135a weist den Verbindungselementen 190 der Figur 5 vergleichbar ausgebildete Verbindungselemente 198 auf, die zwischen der Endlamelle 172a und der Trägerscheibe 136 vernietet sind. Im Weiteren zeigt die Figur 6 ein Verbindungselement 190a mit einem axial verlängerten Stift 186 auf, das beispielsweise an mehreren Umfangspositionen das Verbindungselement 190 der Figur 5 ersetzt und dadurch einen Zugriff des Lamellenträgers 134 auf die Reibeinrichtung 185 ermöglicht, indem die Stifte 186 den Reibring 187 in Umfangsrichtung gegenüber dem Gehäuse des Kupplungsaggregats mitnehmen und so die Reibeinrichtung steuern.

Die einzelnen Verzahnungsbleche haben gemäß dem in Fig. 4 gezeigten Ausführungsbeispiel zwei unterschiedliche Längen und sind über den Umfang abwechselnd verteilt. Die kürzeren Verzahnungsbleche sind mit dem Verbindungsblech 50 der eingangsseitigen Lamellenträger 48 und 51 der Lamellenkupplung K1 und K2 vernietet. Die längeren Verzahnungsbleche sind mit dem Zugtopf 52, der die Betätigungskräfte zurückführt auf das Einrückergehäuse 28 verbunden. Durch diese abgestuften Verzahnungsbleche wird erreicht, dass das Fliehkraftpendel verdrehspielfrei an den sekundärseitigen Flansch des ZMS angebunden ist. Damit ist der Zugtopf 52 form- und kraftschlüssig mit dem eingangsseitigen Lamellenträger 48 der Lamellenkupplung K1 verbunden und kann die auftretenden Betätigungskräfte aufnehmen.

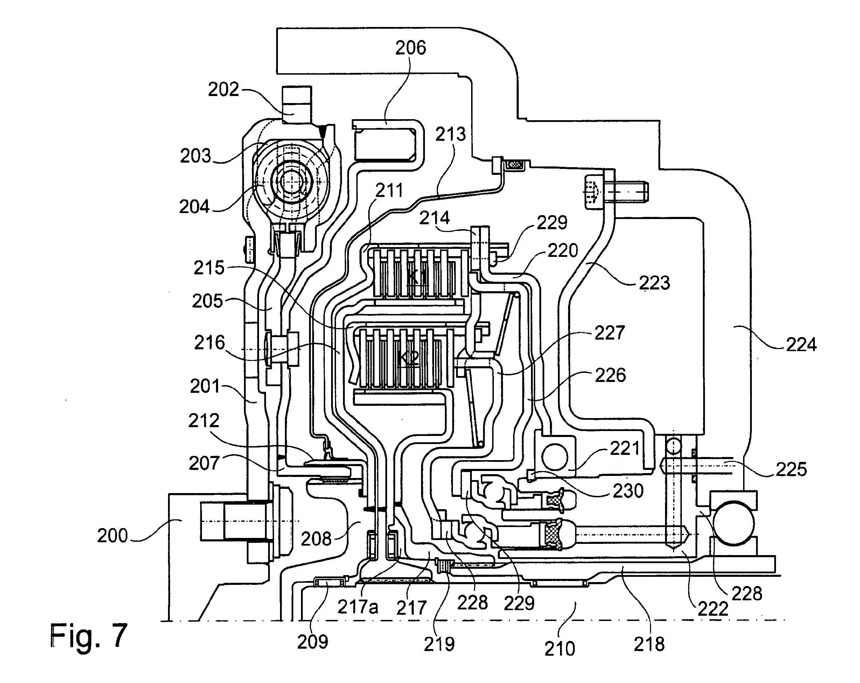

In Fig. 7 ist eine Doppelnasskupplung mit intern geschlossenem Kraftfluss und Betätigung über einen in die Kupplung über das Deckellager mitintegrierten Doppelringkolbeneinrückers als gehäusefestem CSC gezeigt, wobei der grundsätzliche Aufbau dem Ausführungsbeispiel nach Fig. 1 entspricht. Wie nachstehend noch im Einzelnen erläutert, leiten die Kolben des Doppelringkolbeneinrückers die Einrückkraft vorliegend über Einstellscheiben in die Lamellenpakete der Lamellenkupplungen K1, K2 ein. Bei der inneren Kupplung K2 fließt hierbei die Betätigungskraft über den Außenlamellenträger (=Eingangslamellenträger) und den Zwischensteg (=Verbindungsblech 214) zum Außenlamellenträger der äußeren Kupplung. Von dort fließt die Kraft über den Sicherungsring 229 und den Kupplungsdeckel 220 (=Zugtopf) zurück zum Deckellager 221, welches die Kraft über einen Sicherungsring 230 in den CSC zurückleitet und damit den Kraftfluss schließt. Bei der äußeren Kupplung K1 fließt hierbei die Kraft nach dem Lamellenpaket über den Außenlamellenträger 211, den Sicherungsring 229, den Kupplungsdecke 220, das Deckellager 221 und den Sicherungsring 230 zwischen Deckellager und CSC-Gehäuse zurück. Bei der Betätigung werden somit keine Kräfte in die Umgebung eingeleitet.

Im einzelnen zeigt Figur 7 einen Halbschnitt einer Drehmomentübertragungseinrichtung in einem Antriebsstrang eines Kraftfahrzeug, wie Pkw oder Lkw, zwischen einer (nicht im einzelnen gezeigten) Antriebseinheit mit einer Antriebswelle 200 (vorliegend: einem Verbrennungsmotor mit einer Kurbelwelle), welche mit einer Eingangsseite 201 eines ZMS verbunden ist, wobei diese Eingangsseite 201 auch einen Anlasserzahnkranz 202 trägt und wobei in einem radial äußeren Bereich der Eingangsseite 201 ein im Wesentlichen geschlossener Aufnahmebereich 203 für Federelemente 204 (im Regelfall: Bogenfedern) vorgesehen ist. Ein Ausgangsteil 205 des ZMS greift in die Bogenfedern 204 ein, wobei das ZMS-Ausgangsteil 205 mit einer Zusatzschwungmasse 206 vernietet ist. Die ZMS-Ausgangsseite 205 ist radial innen mit einem Flanschbereich 207 verbunden, welcher radial innen eine Verzahnung aufweist, die mit einer radial außen liegenden Verzahnung einer Kupplungsnabe 208 in Eingriff ist. Die Verzahnung zwischen dem Flansch 207 auf der Ausgangsseite des ZMS und der Kupplungsnabe 208 als der Eingangsseite der nachfolgend noch im Einzelnen beschriebenen Doppelnasskupplung stellt die Trennebene zwischen mit dem Motor verbundenem ZMS (Motorbaugruppe) und mit dem Getriebe verbundenen Doppelnasskupplung (Getriebebaugruppe) bei Montage dar, in der eine drehfeste Verbindung bei axialer Verlagerbarkeit vorgesehen ist. Die Kupplungsnabe 208 ist radial innen mit einem Lagersitz für ein Radiallager 209 (vorliegend eine Nadellagerhülse) ausgebildet, wobei die Kupplungsnabe 208 über das Lager 209 auf der inneren Getriebeeingangswelle 210 axial gelagert ist. Hierbei ist der Lageraußenring des Lagers 209 fest in der Kupplungsnabe 208 aufgenommen und die Wälzkörper laufen unmittelbar auf einer entsprechenden Umfangsfläche der Getriebeeingangswelle 210.

Die Kupplungsnabe 208 ist mit einem Eingangslamellenträger 211 einer in der radialen Schachtelung radial außen angeordneten Lamellenkupplung K1 axial fest und drehfest verbunden (vorliegend: verschweißt), wobei zwischen dem Eingangslamellenträger 211 und der Kupplungsnabe 208 noch zusätzlich ein hülsenartiges Bauteil 212 eingeklemmt ist, welches eine Lauffläche für einen Radialwellendichtring zur Verfügung stellt, der die Dichtstelle zwischen Kupplungsdeckel 213 und ZMS Ausgangsflansch abgedichtet. Die Kupplungsnabe ist im radial inneren Bereich geschlossen und übernimmt so die Abdichtung des Nassraumes in dem Bereich, in welchem der Kupplungsdeckel "offen" ist.

Der äußere Eingangslamellenträger 211 (=Kupplungskorb) ist über ein Verbindungsblech 214 mit einem inneren Eingangslamellenträger 215, der in der radialen Schachtelung radial innen angeordneten Kupplung K2, verbunden. Die jeweiligen Verbindungen zwischen den Eingangslamellenträgern 211, 215 und dem Verbindungsblech 214 entsprechen den bereits vorstehend beschriebenen.

Der Ausgangslamellenträger 216 der äußeren Lamellenkupplung K1 ist über eine in einem zugehörigen Flanschbereich ausgebildete axiale Steckverzahnung mit der inneren Getriebeeingangswelle 210 drehfest, jedoch axial verlagerbar verbunden. Der Ausgangslamellenträger 217, der radial innen angeordneten Lamellenkupplung K2 ist ebenfalls über einen in einem zugehörigen Flanschbereich ausgebildete axiale Steckverzahnung mit der äußeren Getriebeeingangswelle 218 drehfest, jedoch axial verlagerbar verbunden. Vorliegend ist die zugehörige Verzahnung in einem Nabenbereich ausgebildet, der mit dem Ausgangslamellenträger der Kupplung K2 verschweißt ist, wobei der Nabenbereich zusätzlich Vorsprünge bzw. Vertiefungen aufweist, die Strömungskanäle 217A bilden, um Kühlöl zwischen den Ausgangslamellenträgern der Lamellenkupplungen K1 und K2 hindurch strömen zu lassen.

Zudem ist zwischen dem Nabenbereich 217 und der Hohlwelle 218 ein Federelement, wie eine Wellfeder 219 angeordnet, um den Nabenbereich / den Ausgangslamellenträger der Lamellenkupplung K2 über ein Axiallager am Ausgangslamellenträger der Lamellenkupplung K1 und über ein weiteres Axiallager an der Kupplungsnabe 208 vorzuspannen. Die Kupplungsnabe 208 wiederum ist über den Eingangslamellenträger 211 der Lamellenkupplung K1 und einen Zugtopf 220 in Verbindung mit dem Deckellager 221 am Gehäuse 222 des CSC axial gelagert. Das Gehäuse 223 des CSC wird über ein im Wesentlichen starres topfförmig ausgebildetes Bauteil 223, welches vergleichbar einer Spannpratze bzw. Blechpratze zum Aufspannen eines Werkstückes in einer Bearbeitungsmaschine funktioniert, am Glockenboden 224 verspannt. Alternativ kann auch eine elastische Vorspannung des topfförmig ausgebildeten Bauteils 223 vorgesehen sein. Das einer Spannpratze / Blechpratze entsprechende Bauteil 223 dient dabei zum Verspannen einer Ölzuführung 224, mit welchem Öl an das CSC und die darin vorgesehenen Kolben-Zylinder-Einheiten weitergeleitet wird.

Diese Kolben-Zylinder-Einheiten im CSC sind über Betätigungslager mit im Wesentlichen starren Drucktöpfen 226, 227 verbunden, welche auf die jeweiligen Lamellenpakete der Lamellenkupplungen K1 und K2 mit einem Hebelverhältnis 1 : 1 wirkend, bei entsprechender Druckbeaufschlagung der Kolben-Zylinder-Einheiten.

Zwischen den im Wesentlichen starren Drucktöpfen 226, 227 und den Betätigungslagern sind Einstellscheiben 228, 229 vorgesehen zur Einstellung eines Lüftspieles der Lamellenpakete der Lamellenkupplungen K1 und K2, wobei aus dem Drucktöpfen Laschen ausgeformt sein können, um die Einstellscheiben radial zu positionieren, wie am Beispiel des Drucktopfes 227 der radial innen angeordneten Lamellenkupplung K2 gezeigt.

Eine radiale Führung des Drucktopfes 227 der Lamellenkupplung K2 erfolgt über einen am Verbindungsblech 214 ausgeformten Halsbereich, welcher korrespondierend zu einem zylindrischen Bereich des Drucktopfes 227 ausgebildet ist.

Das Verbindungsblech 214 umfasst außerdem Laschen, an welchen die Rückstellfeder, welche den Drucktopf 227 in Öffnungsrichtung der Lamellenkupplung belastet, abgestützt ist.

Eine radiale Führung des Drucktopfes 226 der Lamellenkupplung K1 erfolgt über einen am Zugtopf 220 ausgebildeten zylindrischen Bereich, wobei eine Rückstellfeder, welche den Drucktopf 226 in Öffnungsrichtung vorbelastet, zwischen einer Stirnseite des am Verbindungsblech 220 ausgebildeten Halbereiches abgestützt ist.

Zusammenfassend ist betreffend dem Ausführungsbeispiel nach Fig. 7 festzustellen, daß das CSC gemeinsam mit der Kupplung eine montagefähige Einheit (d.h. eine Vormontagebaugruppe) bildet. Diese Vormontagebaugruppe Kupplung/CSC wird über die Blechpratze 223 am Glockenboden der Kupplungsglocke axial fixiert, wobei eine radiale Zentrierung über den Vorsprung 228 erfolgt. Die Blechpratze 223 wird bei der Montage axial vorgespannt und nimmt im Betrieb die Kräfte und Momente auf, welche von der Kupplung über das Deckellager in den CSC eingeleitet werden. Zusätzlich stützt die Blechpratze die Druckkräfte ab, welche an der Ölübergabe axial in den CSC eingeleitet werden.

Die Vormontagebaugruppe Kupplung/CSC ist dabei über den Zentrierbund 228 am CSC in radialer Richtung im Glockenboden gelagert. Die Kräfte, die über den Zentrierbund abgestützt werden, werden über das Deckellager in das CSC-Gehäuse eingeleitet. Auf der gegenüberliegenden Seite ist die Kupplung über das Radiallager 209, welches als Loslager ausgeführt ist, auf der inneren Getriebeeingangswelle gelagert.

Zur Einstellung des Lüftspiels wird vorliegend der Abstand zwischen der Anlagefläche des Sicherungsrings 230 am Kupplungsdeckel zur Anlagefläche der Einstellscheibe(n) 228, 229 am Einrücklager gemessen. Zusätzlich wird der Abstand zwischen der Anlagefläche des Sicherungsrings 229 an der Nut im Außenlamellenträger der äußeren Kupplung und der Anlagefläche der Einstellscheibe(n) am Drucktopf gemessen. Die Differenz dieser Messbeträge abzüglich des geforderten Lüftspiels am Lamellenpaket ergibt die Dicke der benötigten Einstellscheibe.

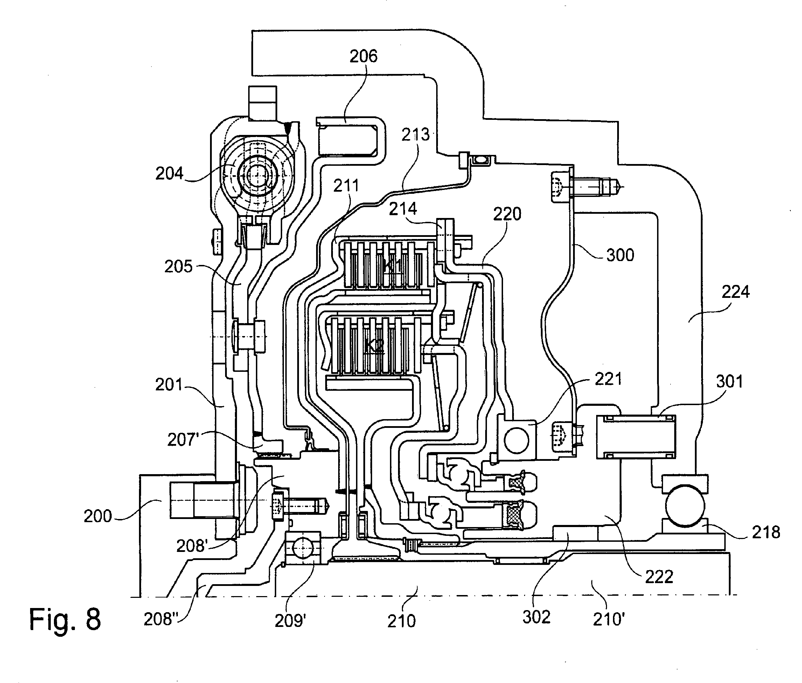

In Fig. 8 ist ein Ausführungsbeispiel einer getriebewellenfesten Doppelnasskupplung mit Axialspielausgleich in der Ölzuführung gezeigt.

Das Ausführungsbeispiel der Doppelnasskupplung nach Figur 8 entspricht betreffend der Ausgestaltung des ZMS mit der Eingangsseite 201 den Bogenfedern 204 und der Ausgangsseite 205 sowie der Verbindung mit der Zusatzmasse 206 und dem Flanschbereich 207 und auch betreffend der wesentlichen Merkmale der Doppelnasskupplung und der deren Betätigung sowie der Getriebeeingangswellen und des Glockenbodens dem bereits vorstehend im Zusammenhang mit Figur 7 ausgeführten.

Der Flanschbereich 207' des ZMS, welcher die Innenverzahnung trägt, die mit einer Außenverzahnung an der Kupplungsnabe 208' der Doppelnasskupplung in Verbindung steht ist allerdings axial kürzer ausgebildet, da der Radialwellendichtring am Deckel 213 unmittelbar gegen eine äußeren Mantelfläche der Kupplungsnabe 208' anliegt und den Nassraum gegenüber dem Trockenraum abdichtet. Der Aufbau nach Figur 8 unterscheidet sich vom Aufbau nach Figur 7 außerdem im Lagerungskonzept, da die Kupplungsnabe 208' über ein Festlager 209' auf der inneren Getriebeeingangswelle 210' radial und axial gelagert ist. Zur Montage des Festlagers 209' weist die Kupplungsnabe 208' einen Kupplungsnabendeckel 208" auf, wobei ein Lageraußenring des Festlagers 209' zwischen diesem Deckel 208" und der Kupplungsnabe 208' eingeklemmt ist. Ein Innenring des Lagers 209' ist zwischen einer Wellenschulter und einem Sicherungsring an der Welle 210' befestigt. Der Eingangslamellenträger 211 (=Kupplungskorb) der äußeren Lamellenkupplung K1 ist, entsprechend dem Ausführungsbeispiel nach Figur 7, mit der Kupplungsnabe 208' verbunden, wobei (ebenfalls entsprechend der Ausgestaltung der Figur 7) der Zugtopf 220 über das Deckellager 221 mit dem Gehäuse 222 des CSC verbunden ist. Auch die Ausgestaltung der Kolben-Zylinder-Einheiten im CSC sowie die Ausbildung der Betätigungslager, der Einstellscheiben und Betätigungstöpfe entspricht dem in Zusammenhang mit Figur 7 beschriebenen. Weiterhin ist die axialer Lagerung der Nasskupplung mit Wellfeder und zwei Axiallagern an der Kupplungsnabe 208' entsprechend dem im Zusammenhang mit Figur 7 gesagten ausgebildet.

Anstelle des als Spannpratze / Blechpratze wirkenden Bauteils 223 ist vorliegend jedoch ein flexibles Blech 300 vorgesehen (nachfolgend auch als "Flexplate" bezeichnet), welches als axial und radial "weiche" Drehmomentenabstützung wirkt. Das CSC-Gehäuse 222 wiederum ist über Röhrchen 301 mit der Ölzufuhr im Getriebegehäuse verbunden (pro Kolben-Zylinder-Einheit zumindest ein Röhrchen), wobei eine Länge der Röhrchen so bemessen ist, dass eine Axialbewegung des CSC-Gehäuses 222 ermöglicht ist. Dementsprechend überträgt die Flexplate keinerlei Kräfte in Axialrichtung.

Zur radialen Abstützung der Systemeinheit aus Kupplung und CSC ist ein Radiallager 302 zwischen dem CSC Gehäuse 222 und der äußeren Getriebeeingangswelle 218 vorgesehen.

Zusammenfassend ist betreffend dem Ausführungsbeispiel nach Fig. 8 festzustellen, daß die Systemeinheit Kupplung/CSC (Vormontagebaugruppe) über ein Festlager auf der inneren Getriebeeingangswelle axial fixiert ist. Um den Sicherungsring am Festlager montieren zu können, besitzt die Kupplung einen Nabendeckel 208", der das Festlager in der Kupplung fixiert und den Nassraum zum Trockenraum hin abtrennt. Zudem wird das Drucköl dem CSC über horizontal verlaufende Röhrchen 301 zugeführt. Diese Röhrchen (beispielsweise ein Rohr pro Teilkupplung) sind über Dichtungen beidseitig zum CSC und zur Kupplungsglocke hin abgedichtet. Die Rohre haben in axialer Richtung Spiel, um axiale Wellen- und Kupplungsbewegungen ausgleichen zu können. Die Flexplate 300 ist beim vorliegenden Ausführungsbeispiel axial weich ausgeführt und folgt den Bewegungen der Kupplung. In Umfangsrichtung ist die Flexplate vergleichsweise steif ausgeführt und stützt das Reibmoment der Einrücklager am Glockenboden ab. Die Flexplate muss hier nicht zwingend als rotationssymetrisches Bauteil ausgeführt sein, sondern kann auch als Blechlasche(n) ausgeführt sein, die mit CSC und Glockenboden verschraubt ist/sind.

Wie dargelegt ist die Kupplung in radialer Richtung über das Festlager auf der inneren Getriebeeingangswelle gelagert und auf der gegenüberliegenden Seite über das Deckellager und ein Nadellager zwischen äußerer Getriebeeingangswelle und CSC-Gehäuse gelagert.

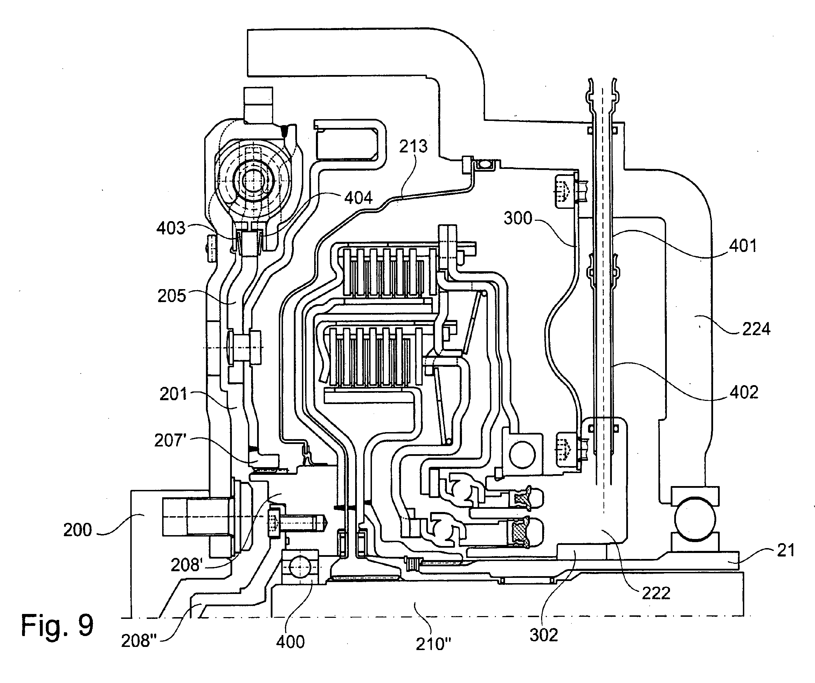

In Fig. 9 ist ein Ausführungsbeispiel einer axial schwimmend gelagerten Doppelnasskupplung mit radialer Ölzuführung gezeigt. Das Ausführungsbeispiel nach Figur 9 stimmt dabei in vielen Merkmalen mit dem Ausführungsbeispiel nach Figur 8 überein, weshalb nachfolgend nur auf Unterschiede zwischen diesen Kupplungsaggregaten nach den Figuren 8 und 9 eingegangen wird. So ist der Bereich von der Kurbelwelle 200 bis zur Kupplungsnabe 208' bei den Ausführungsbeispielen der Figuren 8 und 9 identisch. Ein erster Unterschied zwischen diesen Ausführungsbeispielen liegt darin, dass das Lager 400 zwischen der Kupplungsnabe 208' und der innen liegenden Getriebeeingangswelle 210" im Ausführungsbeispiel nach Fig. 9 nunmehr als axiales Loslager ausgebildet ist, da zwar der Lageraußenring des Lagers 400 zwischen Kupplungsnabendeckel 208" und Kupplungsnabe 208' festgeklemmt ist, aber der Lagerinnenring des Lagers 400 auf der Getriebeeingangswelle 210" nicht fixiert ist.

Weiterhin stimmen die Ausführungsbeispiele der Figuren 8 und 9 dahingehend überein, dass eine Flexplate 300 vorgesehen ist, welche das CSC-Gehäuse 222 mit dem Glockenboden 224 verbindet, wobei aber im Ausführungsbeispiel nach Fig. 9 eine andere, vorliegend radiale Art der Ölzuführung über radial angeordnete Rohrleitungen 401 und 402 zwischen getriebeseitiger Ölführung und CSC vorgesehen ist. In radialer Richtung ist das CSC-Gehäuse 222 wieder über ein Radialnadellager 302 an der äußeren Getriebeeingangswelle 218 gelagert.

Zusammenfassend ist bei dem Ausführungsbeispiel nach Fig. 9 die Systemeinheit Kupplung/CSC (=Vormontagebaugruppe) motorseitig über ein Loslager radial auf der inneren Getriebeeingangswelle gelagert, getriebeseitig ist die Kupplung über das Deckellager und ein Nadellager zwischen äußerer Getriebeeingangswelle und CSC-Gehäuse radial gelagert. Weiterhin ist die Doppelnasskupplung nach diesem Ausführungsbeispiel axial schwimmend zwischen der Flexplate 300 und den Federn 403, 404, die im Zweimassenschwungrad für die Erzeugung der Grundreibung benötigt werden, aufgehängt. Zudem wird das Betätigungsöl der Kupplung in radialer Richtung über zwei Rohrleitungen zugeführt, wobei die Leitungen so ausgeführt sind, dass sie die Axialbewegungen der Kupplung aufnehmen können. Jede Rohrleitung besteht z.B. aus zwei Teilrohren, wobei das im CSC-Gehäuse sich befindende Rohrstück gemeinsam mit der Systemeinheit montiert wird, und wobei anschließend das zweite Teilrohr durch eine Öffnung in der Kupplungsglocke eingeführt und mit dem ersten Teilrohr verbunden wird. Die Verbindungsstellen der Rohrstücke sind jeweils zueinander abgedichtet und so ausgeführt, dass die Druckkräfte welche in Rohrlängsrichtung wirken aufgenommen werden können. Um den Nassraum vom Trockenraum abzutrennen, befindet sich vorliegend zwischen der Öffnung der Kupplungsglocke und dem zweiten Teilrohr eine zusätzliche Abdichtung.

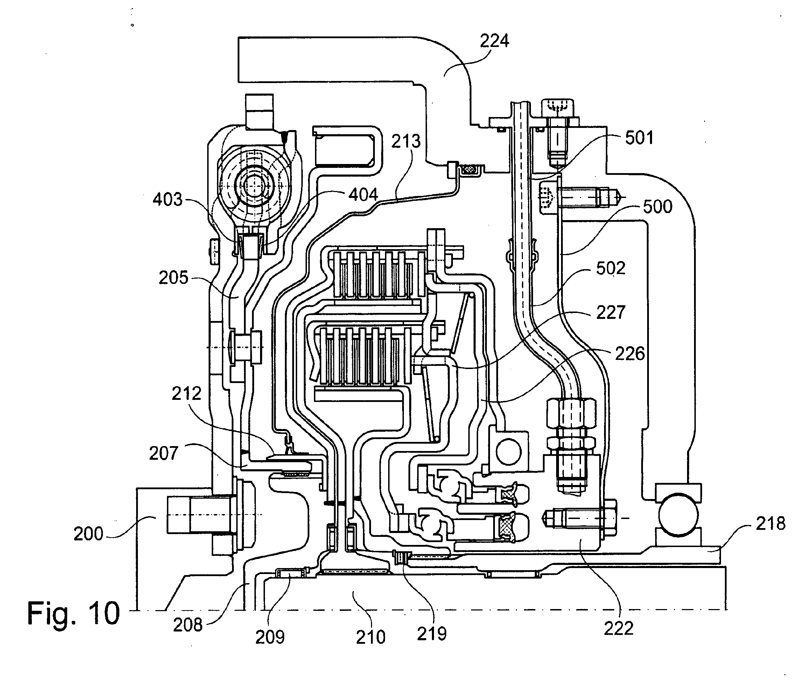

In Fig. 10 ist ein Ausführungsbeispiel einer weiteren axial schwimmend gelagerten Doppelkupplung, hier mit einer Flexplatelagerung, gezeigt. Das Ausführungsbeispiel nach Figur 10 umfasst eine Doppelnasskupplung mit einer Kupplungsnabe 208 und einer Lagerung der Kupplungsnabe 208 auf der inneren Getriebeeingangswelle 210 über das Loslager 209, wie vorstehend im Zusammenhang mit Figur 7 bereits beschrieben. Zudem umfasst das Ausführungsbeispiel nach Figur 10 einen Verbindungsflansch 207 zwischen der Ausgangsseite 205 des ZMS und der Kupplungsnabe 208, welcher dem im Zusammenhang mit Figur 7 beschriebenen entspricht. Des Weiteren ist das hülsenartige Bauteil 212 vorgesehen, welches ebenfalls in Zusammenhang mit Figur 7 beschrieben ist. Zudem entsprechen auch die Merkmale des Kupplungsdeckels 213 und der Doppelnasskupplung, insbesondere die axiale Lagerung über die Wellfeder 219 in Verbindung mit den beiden Axialnadellagern an der Kupplungsnabe 208 und die Betätigung über die Drucktöpfe 226 und 227 den im Zusammenhang mit Figur 7 beschriebenen. Dies gilt insbesondere auch als zwischen dem CSC-Gehäuse 222 und der äußeren Getriebewelle 218 sowohl beim Ausführungsbeispiel nach Figur 7 als auch beim Ausführungsbeispiel nach Figur 10 keine radiale Lagerung vorgesehen ist.

Die beiden Ausführungsbeispiele nach Figur 7 und Figur 10 unterscheiden sich aber dahingehend, dass beim Ausführungsbeispiel nach Figur 7 am CSC-Gehäuse ein axialer Ansatz 228 vorgesehen ist, an welchem das CSC-Gehäuse 222 radial in der Kupplungsglocke 224 gelagert ist, wohingegen beim Ausführungsbeispiel gemäß Figur 10 eine Flexplate 500 vorgesehen ist, welche das CSC-Gehäuse 222 mit dem Glockenboden 224 verbindet, wobei eine Verbindungsstelle zwischen Flexplate 500 und Glockenboden radial außerhalb des Durchmessers der Doppelnasskupplung angeordnet ist zur Erleichterung der entsprechenden Montage. Vergleichbar dem Ausführungsbeispiel nach Figur 9 ist eine Ölzuführung über Röhrchen 501 und 502 vorgesehen zur Versorgung des CSC mit Hydraulikmedium. Dabei ist das getriebegehäuseseitige Röhrchen 501 mit dem Getriebegehäuse verschraubt. Weiterhin ist das CSC-seitige Röhrchen am CSC-Gehäuse 222 über eine Schraubverbindung befestigt. Die Röhrchen 501 und 502 sind axial gegeneinander verschiebbar und gegeneinander abgedichtet, wobei beide Röhrchen 501 und 502 im Wesentlichen in radialer Richtung erstreckt sind.

Zusammenfassend ist bei dem Ausführungsbeispiel nach Fig. 10 die Systemeinheit Kupplung/CSC motorseitig über ein Loslager radial auf der inneren Getriebeeingangswelle gelagert. Getriebeseitig ist die Kupplung radial über das Deckellager und die Flexplate in der Kupplungsglocke gelagert. Das CSC-seitige Ölleitungsteil ist über eine Verschraubung mit dem CSC verbunden und abgedichtet. Das zweite Leitungsstück (getriebegehäuseseitig) ist über einen Flansch außen mit der Kupplungsglocke verschraubt und über einen O-Ring abgedichtet. Die Ölzuführung ist auch hier in axialer Richtung weich ausgeführt, um die Axialbewegungen der Kupplung aufnehmen zu können und die Systemeinheit schwimmt zwischen Flexplate und Federn am Zweimassenschwungrad, wie im Zusammenhang mit Fig. 9 bereits beschrieben.

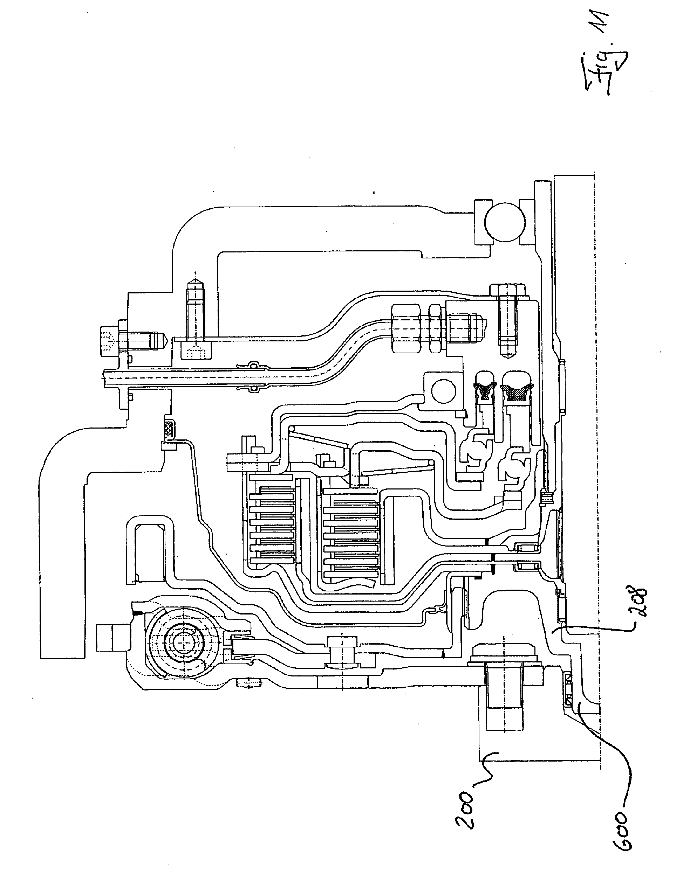

In Fig. 11 ist ein Ausführungsbeispiel einer weiteren axial schwimmend gelagerten Doppelkupplung hier mit einer Flexplatelagerung gezeigt, wobei zusätzlich zur axial schwimmenden Lagerung und der Flexplatelagerung eine Lagerung über einen Piloten zwischen Kurbelwelle und Kupplung vorgesehen ist. Hierbei ist die gesamte Ausführung des Ausführungsbeispieles nach Fig. 11 identisch zur Ausbildung nach Fig. 10, wobei ein Pilot 600 vorgesehen ist, der als Verlängerung der Kupplungsnabe 208 ausgebildet ist. Zwischen dem Pilot 600 und der Kurbelwelle 200 ist ein Loslager (z.B. ein Radialnadellager) angeordnet.

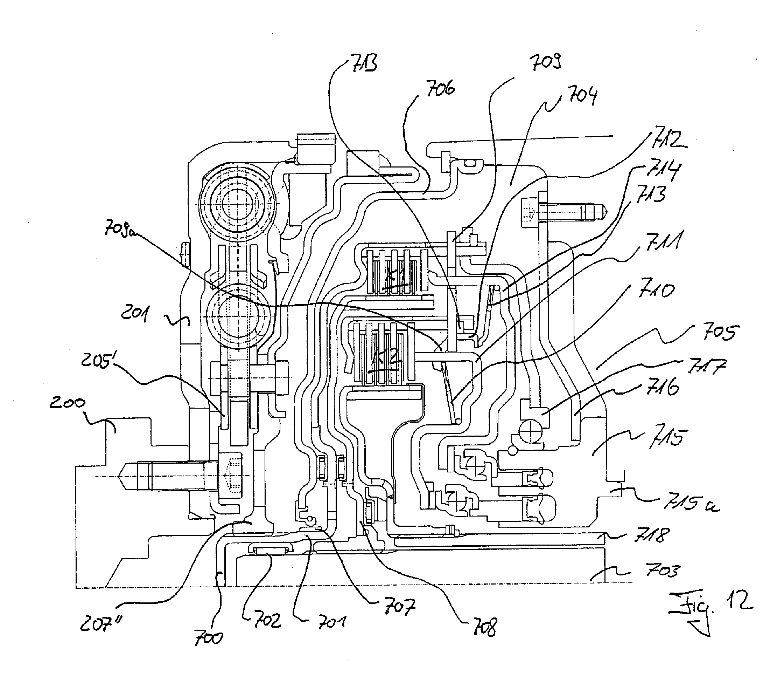

In Fig. 12 ist ein Ausführungsbeispiel einer weiteren Doppelnasskupplung mit einem trockenen ZMS gezeigt. Gemäß dem Ausführungsbeispiel nach Figur 12 ist ein ZMS mit radial außen liegenden Bogenfedern und radial innen liegend angeordneten Bogenfedern gezeigt, welches insbesondere bei Verbrennungsmotoren mit stark ausgeprägten Drehungleichförmigkeiten verwendet werden kann, wobei jedoch die Ausbildung des ZMS für die Ausgestaltung der Doppelkupplung und der Verbindung zwischen ZMS und Doppelkupplung und auch für die Betätigungseinrichtung der Doppelkupplung keine einschränkende Bedeutung zukommt. Vielmehr ist lediglich relevant, dass zwischen der Kurbelwelle 200 und Doppelnasskupplung ein ZMS und ein anderes Drehschwingungsdämpfungssystem mit Eingangsseite 201 und Ausgangsseite 205' vorgesehen ist, wobei ein Ausgangsflansch 207" mit einer Eingangsnabe 700, welche im Wesentlichen der Ausbildung nach Figur 1 entspricht, verbunden ist. Auch die Ausgestaltung des Eingangslamellenträgers 701 entspricht den im Zusammenhang mit Figur 1 beschriebenen Eingangslamellenträger 13. Des Weiteren ist die Eingangsnabe 700 und der damit verbundene Eingangslamellenträger der Kupplung K1 über ein Radiallager 702 entsprechend dem Radiallager 16 nach Figur 1 an der inneren Getriebeeingangswelle 703 radial abgestützt. Der Nassraum 704 in dem die Doppelnasskupplung aufgenommen ist, wird vom Glockenboden 705 und dem Kupplungsdeckel 706 abgestützt, wobei zwischen Kupplungsdeckel 706 und Eingangsnabe 700 ein Radialwellendichtring vorgesehen ist, der auf einer Lauffläche 707 läuft, welche auf einer äußeren Mantellinie der Kupplungsnabe angebracht ist, wobei diese Lauffläche 707 in axialer Richtung nachfolgend zur axialen Steckverzahnung zwischen ZMS Ausgangsflansch 707" und Kupplungsnabe 700 angeordnet ist.

Der Ausgangslamellenträger 708 der äußeren Lamellenkupplung K1 und der zugehörige Ausgangsflansch sind ebenfalls weitestgehend entsprechend zum Ausgangslamellenträger 13 und dem Ausgangsflansch 14 gemäß dem Ausführungsbeispiel nach Figur 1 ausgebildet. Des Weiteren ist auch der Eingangslamellenträger der radial innen liegend angeordneten Lamellenkupplung K2 weitestgehend entsprechend dem Eingangslamellenträger 18 der Lamellenkupplung K2 ausgebildet, wobei zwischen den Eingangslamellenträgern der Lamellenkupplungen K1 und K2 beim Ausführungsbeispiel nach Figur 12 ein anders gestaltetes Verbindungsblech 709 im Gegensatz zum Verbindungsblech 17 nach Figur 1 verwendet wird. Dieses Verbindungsblech 709 ist im Wesentlichen eben ausgebildet und umfasst Laschen 709A, welche aus dem Verbindungsblech 709 herausgeprägt wurden, die als Abstützfinger für die Rückstellfeder 710 des Drucktopfes 711 der radial inneren Lamellenkupplung K2 verwendet werden. Beim Ausführungsbeispiel nach Figur 7 und Figur 8 umfasste das Verbindungsblech 214 zudem einen zylindrischen Halsbereich, welcher als Führung für den Drucktopf der Kupplung K2 verwendet wurde. Dieser zylindrische Halsbereich ist beim Ausführungsbeispiel gemäß Figur 12 weggelassen, wobei eine Führung über den zylindrischen Stirnbereich des im Wesentlichen ebenen Verbindungsbleches erfolgt. Beim Ausführungsbeispiel nach Figur 7 und Figur 8 wurde der zylindrische Halsbereich ebenfalls als Abstützstelle für die Rückstellfeder des Drucktopfes der äußeren Kupplung K1 verwendet. Anstelle dieses zylindrischen Halsbereiches ist ein ringförmiges Element 712 vorgesehen, welches am Verbindungsblech 709 abgestützt ist und welches über einen Sicherungsring 713 am Eingangslamellenträger der inneren Kupplung K2 radial zentriert ist und welches neben einem zylindrischen Bereich einen radial erstreckten Bereich aufweist, an dem die Rückstellfeder 713 des Drucktopfes 714 der äußeren Kupplung K1 abgestützt ist. Zwischen Rückstellfeder 713 und Drucktopf 714 bzw. zwischen Rückstellfeder 710 und Drucktopf 711 der Kupplung K1 und K2 sind Runddrahtfederelemente angeordnet, an denen sich der jeweilige Stirnbereich der Federn abstützt. Vergleichbar dem Ausführungsbeispiel nach Figur 7 ist das Gehäuse 715 des CSC über einen axial erstreckten Ansatz 715A am Glockenboden 705 radial zentriert und wird über ein einer Spannpratze / Blechpratze entsprechend funktionierendes Bauteil 716 am Glockenboden axial verspannt. Das Deckellager 717 ist am CSC-Gehäuse 715 über einen Runddrahtspannring in Verbindung mit einer am Lagerinnenring ausgebildeten Schräge in axialer Richtung befestigt, um einen internen Kraftfluss der Betätigungskraft herstellen zu können, wohin gehen im Ausführungsbeispiel nach Figur 7 ein Sprengring mit rechteckigem Querschnitt verwendet ist. Zwischen dem CSC-Gehäuse 715 und der Hohlwelle 718 ist keine zusätzliche Radiallagerungsstelle vorgesehen.

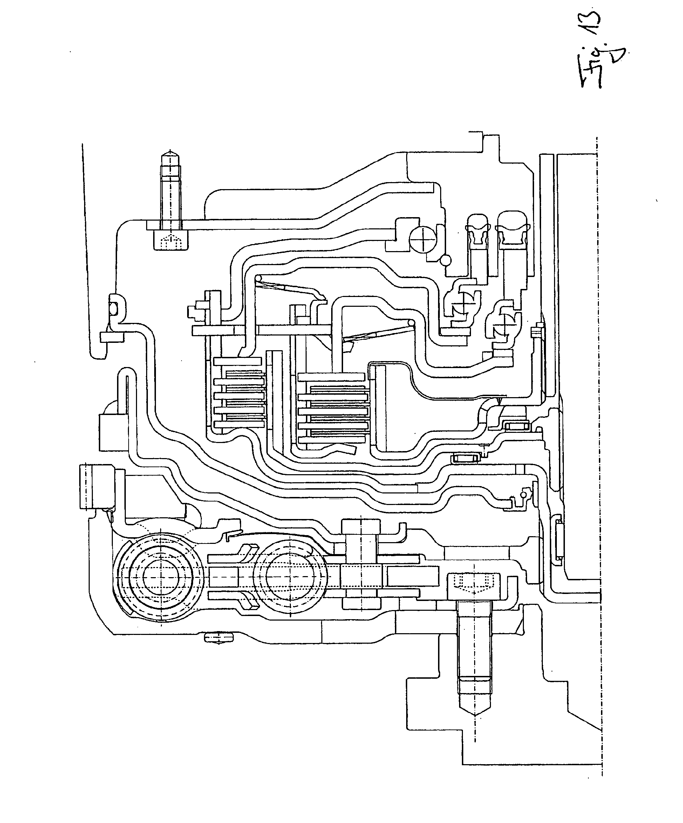

Die Konstruktion nach Fig. 12 umfasst zusammenfassend folgende Merkmale:
1. Die erste Spielstelle im Momentenfluss befindet sich nach dem Lamellenpaket der äußeren Kupplung K1. Weil diese Spielstelle nach dem Reibsystem liegt, treten hier im Betrieb keine Klappergeräusche auf.
2. Die Rückdruckfedern stützen sich über einen offenen oder geschlossenen Runddrahtring ab. Dadurch ergibt sich ein besseres Abrollverhalten der Feder beim Betätigen der Kupplung was zu einer verminderten Grundhysterese des Betätigungssystems führt.
3. Die Rückdruckfeder der äußeren Kupplung K1 wird über einen am Zugtopf ausgebildeten umlaufenden Ring abgestützt, der über den Sicherungsring des Außenlamellenträgers der inneren Kupplung zentriert wird.
4. Am Verbindungsblech bzw. -steg, der die Eingangslamellenträger der beiden Kupplungen miteinander verbindet, befinden sich am inneren Durchmesser mehrere Finger, an denen sich die Rückdruckfeder der inneren Kupplung abstützt.
5. Zur Zentrierung der Axialnadellager (alternativ auch Gleitscheiben) werden aus dem Blech Noppen extrudiert (mindestens 3).
6. Das Deckellager der Kupplung, welches über den Lagerinnenring auf dem CSC zentriert wird, stützt die axial auftretende Betätigungskraft über einen Sprengring am CSC ab. Dieser Sprengring kann einen rechteckigen oder runden Querschnitt aufweisen. Beim Einsatz eines Runddrahtsprengrings treten im CSC geringere Spannungsspitzen als bei der Verwendung von Rechtecksprengringen auf.
7. Die ringförmigen Kolben des CSC weisen Spiel (bis auf die Kolbendichtungen) zum CSC-Gehäuse auf und das Verhältnis von Kolbenführungslänge zu Kolbeninnendurchmesser ist kleiner 0,5. Damit kann der Kolben im Gehäuse nicht nur axial verschoben werden sondern auch verkippen und übernimmt somit eine kardanische Funktion. Wenn durch Toleranzen und im Betrieb durch dynamische Effekte die Kupplung in Bezug auf den CSC verkippt, gleichen die Kolben des CSC diese Verkippung aus bzw. folgen dieser.
8. Das Kühlöl wird der Kupplung zwischen den Ausgangslamellenträgern der Kupplung zugeführt. Das Öl fließt durch ein Druckstück, welches radial verlaufende Nuten aufweist. Anschließend durchströmt das Öl die im Innenlamellenträger der inneren Kupplung angebrachten Öffnungen und gelangt anschließend in den Druckraum der inneren Kupplung.
9. Der Eingangslamellenträger der äußeren Kupplung und die Ausgangslamellenträger der beiden Teilkupplungen werden über Axialnadellager (oder Anlauf. bzw. Gleitscheiben) zueinander beabstandet. Beim Einsatz von Nadellagern muss zum störungsfreien Betrieb eine axiale Mindestvorlast herrschen. Diese wird über eine Well- oder Druckfeder erzeugt die sich zwischen der Nabe der inneren Kupplung und einem Sicherungsring oder Absatz der äusseren Getriebeeingangswelle befindet und abstützt. Die Vorlastfeder kann sich anders als in Fig. 12 dargestellt auch am inneren Durchmesser der-. Nabe befinden, wie im Zusammenhang mit beispielsweise Fig. 7 dargestellt.
10. Das Axiallager zur Beabstandung der Ausgangslamellenträger wird über einen Absatz, der in die Nabe der äußeren Kupplung integriert ist, abgestützt.
11. Das Axiallager zwischen dem Außenlamellenträger der äußeren Kupplung K1 und dem Kupplungsdeckel (der Nassraumtrennung) wird funktional nicht benötigt, da die Vorlast der Wellfeder auch über das Deckellager der Kupplung aufgenommen werden kann, wie nachfolgend im Zusammenhang mit Fig. 13 gezeigt und beschrieben.

In Fig. 13 ist ein Ausführungsbeispiel einer weiteren Doppelnasskupplung mit einem trockenen ZMS gezeigt, wobei das Axiallager zwischen dem Außenlamellenträger der äußeren Kupplung K1 und dem Kupplungsdeckel weggelassen ist, da dieses funktionell nicht benötigt wird, wie im vorstehenden Absatz erläutert. Ansonsten stimmen die Ausführungsbeispiele nach den Fig. 12 und 13 miteinander überein.

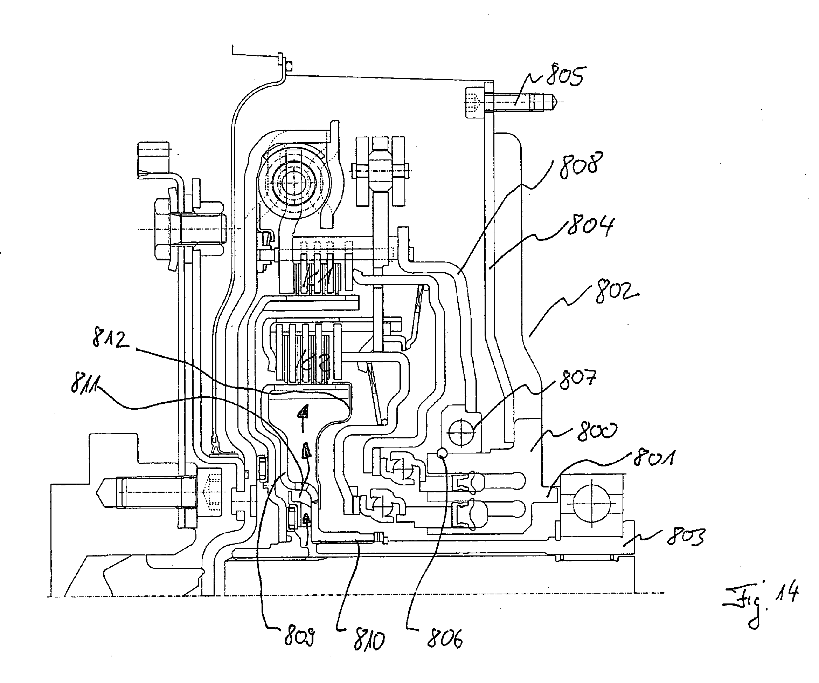

In Fig. 14 ist ein Ausführungsbeispiel einer weiteren Doppelnasskupplung mit intern geschossenem Kraftfluss und nasslaufendem ZMS und Fliehkraftpendel ("FKP") gezeigt. Dieses Ausführungsbeispiel weist sehr große Übereinstimmungen mit dem Ausführungsbeispiel nach den Fig. 4 bis 6 auf, so dass sich die nachfolgenden Ausführungen nur auf die Unterschiede zwischen diesen Ausführungsbeispielen beschränken.

Das Ausführungsbeispiel nach Figur 14 umfasst ein CSC-Gehäuse 800, das einen axialen Ansatz 801 umfasst, über das CSC-Gehäuse 800 im Glockenboden 802 radial zentriert ist, wobei zwischen CSC-Gehäuse 800 und Getriebeeingangswelle 803 keine weitere Radiallagerstelle vorgesehen ist. Axial wird das CSC-Gehäuse 800 über ein einer Spannpratze / Blechpratze entsprechendes Element 804 (welches eine radial außen liegende Verschraubung 805 umfasst) gegen den Glockenboden 802 axial verspannt. An einer äußeren Mantelfläche des CSC-Gehäuses 800 ist ein Sprengring mit rundem Querschnitt 806 vorgesehen, welcher als Anlagefläche für einen Lagerinnenring des Deckellagers 807 dient. Das Deckellager 807 ist über den Zugtopf 808 mit dem Eingangslamellenträger der Kupplung K1 verbunden, welcher über ein Verbindungsblech mit dem Eingangslamellenträger der Kupplung K2 verbunden ist. Die Kupplungen K1 und K2 werden über im Wesentlichen starre Drucktöpfe mit einer Hebelübersetzung mit einem Hebelverhältnis 1:1 betätigt, wobei zwischen den Drucktöpfen und den Kolben-Zylinder-Einheiten des CSC's Betätigungslager und Einstellscheiben angeordnet sind, wobei die Merkmale der Eingangslamellenträger und der Ausgangslamellenträger der Kupplungen K1 und K2 sowie der Betätigungstöpfe, Einstellscheiben und Betätigungslager den im Zusammenhang mit Figur 4 beschriebenen entsprechen.

Dabei unterscheidet sich allerdings der Ausgangslamellenträger 809 der radial innen liegenden Lamellenkupplung in seinem Aufbau vom Ausgangslamellenträger 45 der Kupplung K2 nach Figur 4, wie nachstehend erläutert. Der Ausgangslamellenträger 809 umfasst neben dem zylindrischen Teil mit axialer Steckverzahnung zum Anhängen der einzelnen Lamellen einen radial erstreckten Teil als Verbindung zum Verbindungsflansch 810, welcher den Ausgangsflansch 809 mit der hohlen Getriebeeingangswelle 803 über eine axiale Steckverzahnung verbindet. Beim Ausführungsbeispiel nach Figur 14 ist dieser radial erstreckte Bereich motorseitig vom Lamellenpaket angeordnet, wohingegen beim Ausführungsbeispiel nach Figur 4 der radial erstreckte Bereich getriebeseitig vom Lamellenpaket angeordnet ist. Zudem umfasst der Ausgangslamellenträger 809 einen Durchbruch 811, durch den Kühlöl zum Lamellenpaket der Kupplung K2 strömen kann. Um den Kühlölfluss gerichtet führen zu können, ist ein Blech 812 vorgesehen, welches zwischen dem Verbindungsflansch 810 und dem zylindrischen Teil des Ausgangslamellenträgers 809 angeordnet ist.

Hinsichtlich der übrigen Merkmale dieses Ausführungsbeispieles wird nochmals auf Figur 4 und die dortige Beschreibung hingewiesen.

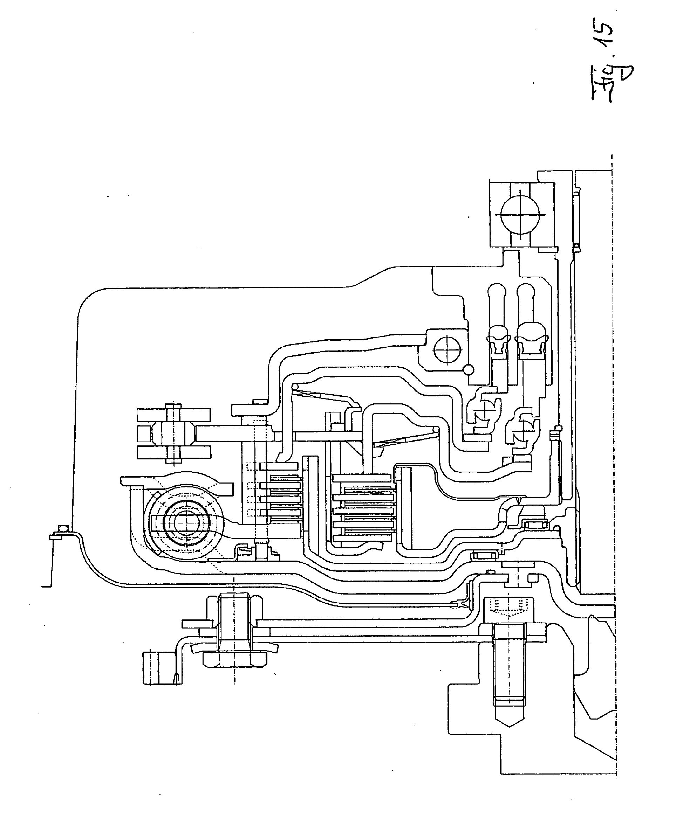

In Fig. 15 ist ein Ausführungsbeispiel einer weiteren Doppelnasskupplung mit intern geschossenem Kraftfluss und nasslaufendem ZMS und Fliehkraftpendel ("FKP") gezeigt, wobei auf die Blechpratze bzw. Spannpratze 804 nach Fig. 14 verzichtet wurde. Eine Vorspannung zur Abdichtung der Verbindung zwischen CSC-Gehäuse und Glockenboden kann auch z.B. über eine entsprechende Wahl der Vorspannungen in den axial wirkenden Reibfedern im ZMS und/oder im gebauten Lamellenträger und/oder in den Verbindungsblechen zwischen Kurbelwelle und ZMS- / Kupplungseingangsseite erreicht werden.

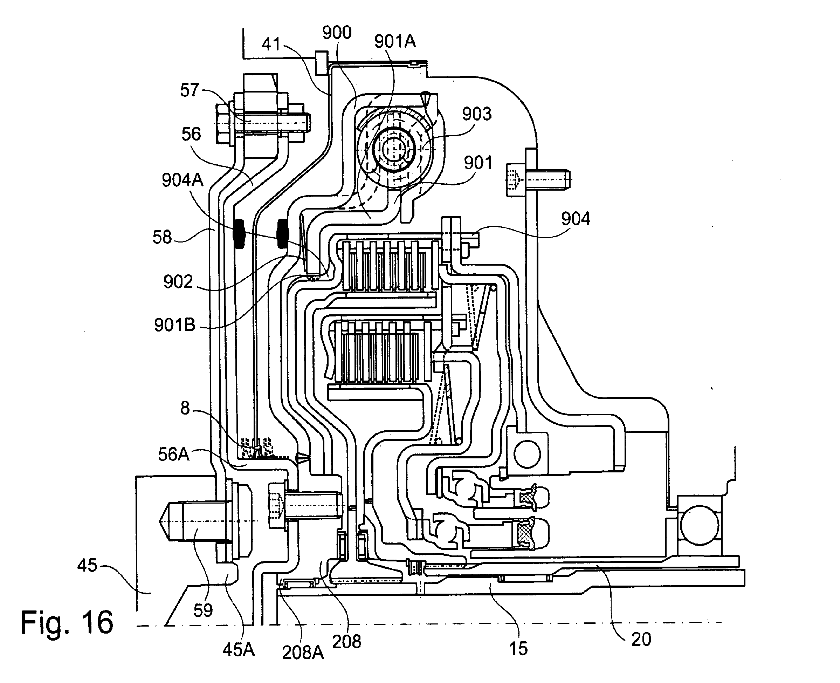

In Fig. 16 ist ein erfindungsgemäßes Ausführungsbeispiel der Drehmomentübertragungseinrichtung im Sinne der vorliegenden Erfindung zwischen einer Antriebswelle 45 und zumindest einer Getriebeeingangswelle 915, 920 gezeigt, wobei die Kurbelwelle 45 über eine Verschraubung 59 mit einem ersten plattenförmigen Bauteil, vorliegender einer Flexplate 58, verbunden ist. Die Flexplate 58 ist hierbei über einen Vorsprung 45A zentriert. Im radial äußeren Bereich der Flexplate 58 ist eine weitere Verschraubung 57 vorgesehen, über welche die Flexplate 58 mit einem zweiten im Wesentlichen plattenförmigen Bauteil, vorliegend der Driveplate 56 verbunden ist.

Die Begriffe Flexplate und Driveplate sind hier nicht einschränkend zu verstehen, sondern beschreiben jeweils ein im Wesentlichen radial erstrecktes, rotationssysmmetrisches Bauteil, das aufgrund seiner Längserstreckung im Verhältnis zur Wandstärke eine gewisse Flexibililtät aufweist, wobei die Flexibilität der Flexplate in der Regel höher ist als die der Driveplate. Das Ausmaß der Flexibilität kann über die Wandstärke oder über ein räumliche Gestaltung der Driveplate / Flexplate eingestellt werden. Die Abfolge von Flexplate und Driveplate im Drehmomentenfluß von Antrieb zu Getriebe ist dabei frei wählbar und an den jeweiligen Anwendungsfall anpaßbar, so dass die Offenbarung der vorliegenden Anmeldung daher beide möglichen Abfolgen umfaßt.

Die Flexplate und die Driveplate 56 weisen dabei jeweils einen topfförmigen Bereich auf, diese sind also nicht - wie in Fig. 4 gezeigt - im Wesentlichen eben in radialer Richtung ausgebildet. Dadurch können Flexplate und Driveplate näher an die weiteren Bauteile der Drehmomentübertragungseinrichtung herangerückt werden, indem eine gewisse axiale Schachtelung erreichbar ist.

Weiterhin ist die Driveplate 56 in deren radial inneren Bereich mit einem im Wesentlichen zylindrischen Bereich 56A ausgebildet, welcher als eine Dicht- und Anlagefläche für einen Radialwellendichtring 8 oder eine Art einer dynamischen Dichtung vorgesehen ist, um zwischen Driveplate 56 und Kupplungsdeckel 41 abzudichten.

Die Driveplate 56 ist mit einer Kupplungsnabe 208 verbunden, vorliegend verschraubt, wobei im Bereich der Anlagefläche von Driveplate 56 zu Kupplungsnabe 208 eine Dichtung vorgesehen sein kann. Die Driveplate 56 ist vorliegend als durchgängige Platte ausgebildet, insbesondere ist die Driveplate 56 im radial inneren Bereich durchgängig und übernimmt dementsprechend die Dichtfunktion des in diesem Bereich offenen Deckels 41.

Die Kupplungsnabe 208 umfasst einen axial erstreckten Bereich 208A, welcher als radiale Zentrierung von Driveplate 56 zu Kupplungsnabe 208 dient.

Die Kupplungsnabe 208 ist vorliegend über eine Schweißnaht mit dem primärseitigen Eingangsflansch 900 des ZMS bzw. des Drehschwingungsdämpfers allgemein fest verbunden.

Radial innen ist die Kupplungsnabe 208 über ein Radiallager (ein Radialnadellager, welches im Bereich der Kupplungsnabe axial fixiert ist), auf einer ersten Getriebeeingangswelle 915 radial gelagert. Vorliegend ist die Getriebeeingangswelle 915 in diesem Ausführungsbeispiel als Hohlwelle ausgebildet.

Der Drehschwingungsdämpfer mit dem Eingangsflansch 900 und einem Ausgangsflansch 901 ist entlang des Drehmomentflusses betrachtet stromab der Kupplungsnabe 208 und im Naßraum (abgedichtet durch einen Kupplungsdeckel 41 und durch den radial inneren Teil der Driveplate 56) angeordnet. Vergleichbar Flexplate 58 und Driveplate 56 sind der Eingangsflansch 900 und der Ausgangsflansch 901 des Drehschwingungsdämpfers jeweils mit einem topfförmigen Bereich ausgebildet, um Teile der nachstehend noch im Einzelnen beschriebenen Kupplungseinrichtung in Form einer axialen und radialen Schachtelung aufzunehmen zur besseren Ausnutzung des axialen Bauraumes.

Zwischen Eingangsflansch 900 und Ausgangsflansch 901 des ZMS ist eine axiale Federeinrichtung 902 vorgesehen, welche eine Axialkraft zwischen diesen beiden Elementen erzeugt und den Ausgangsflansch 901 gegen den Eingangflansch 900 in axialer Richtung vorbelastet.

Zwischen Eingangsflansch 900 und Ausgangsflansch 901 sind in Umfangsrichtung angeordnete Federelemente 903 zur Dämpfung der Drehschwingungen zwischen Eingangs- und Ausgangsflansch 900, 901 vorgesehen.

Der Ausgangsflansch 901 weist neben dem zur Ausbildung der Topfform genutzten zylindrischen Bereich 901A weiterhin einen Verzahnungsbereich 901 B auf, welcher in eine Verzahnung 904A des Kupplungskorbes 904 eingreift. Die Verzahnungen von Ausgangsflansch 901 und Kupplungskorb 904 bilden eine axiale Steckverzahnung zur Ausbildung einer Trennebene für die Montage der Drehmomentübertragungseinrichtung im Sinne der vorliegenden Lehre.

Der Kupplungskorb 904 kann dabei in einem spanlosen Umformprozess erzeugt werden, wobei die Verzahnung 904A bereits bei diesem spanlosen Umformen erzeugt und ggf. nachbearbeitet werden kann. Diese Nachbearbeitung kann spanabhebend oder spanlos, beispielsweise durch Rollumformen, vorgenommen werden, wobei auch eine spielfreie Steckverzahnung erzeugbar ist. Alternativ zur spielfreien Steckverzahnung kann auch eine in Umfangrichtung wirkende Verspanneinrichtung vorgesehen werden.

Der Kupplungskorb 904 ist Teil einer Doppelkupplungseinrichtung, welche bereits im Zusammenhang mit den Ausführungsbeispielen nach den Fig. 8 bis 12 beschrieben wurde, so dass auf eine nochmalige Beschreibung verzichtet werden kann. Hingewiesen werden soll allerdings darauf, dass sich das erfindungsgemäße Ausführungsbeispiel nach Fig. 16 von den bisherigen Ausführungsbeispielen der Doppelkupplungsanordnung dadurch unterscheidet, dass der Kupplungskorb 904 auf der Eingangsnabe 208 radial abgestützt ist, wobei der Kupplungskorb auf der Kupplungsnabe 208 axial verlagerbar und in Umfangsrichtung verdrehbar ist.

Weiterhin sei noch darauf hingewiesen, dass die Ausbildung der Betätigungseinrichtung dem im Zusammenhang mit Fig. 7 beschriebenen entspricht, so dass wiederum auf eine detaillierte Wiederholung verzichtet werden kann.

Auch die Ausbildung der Spannpratze 905 entspricht dem im Zusammenhang mit Fig. 7 zum Fig. 12 gesagten, so dass nachstehend auf eine zusätzliche Beschreibung verzichtet wird.

Vorstehend wurde die vorliegende Lehre ausschließlich im Zusammenhang mit einer Doppelkupplungsvorrichtung beschrieben, wobei hier darauf hingewiesen wird, daß die Lehre, insbesondere die Verwendung einer Baueinheit aus Kupplung und Betätigungseinrichtung und einer Spannpratze / Blechpratze, auch in Verbindung mit einer Einzelkupplung (sowohl einer trockenen als auch nassen Einzelkupplung) verwendbar ist.

## Patentansprüche

1. Drehmomentübertragungseinrichtung in einem Antriebstrang eines Fahrzeuges zur Übertragung eines Drehmomentes zwischen einem Antrieb, wie Verbrennungsmotor oder Elektromotor, und einem Getriebe, wie Doppelkupplungsgetriebe, mit einer Kupplungsnabe (208), wobei die Kupplungsnabe (208) mittelbar oder unmittelbar mit dem Antrieb drehverbunden ist und
einem im Naßraum angeordneten Drehschwingungsdämpfer, wie Zweimassenschwungrad, mit Eingangsflansch (900) und Ausgangsflansch (901) und zwischen diesen angeordneten Dämpfungseinrichtung (903) und
einer Kupplungseinrichtung, wie einer nass laufenden Doppelkupplungseinrichtung insbesondere mit radial geschachtelten Einzelkupplungen, mit einem Kupplungskorb (904) und einer Ausgangsseite und einem zwischen diesen angeordneten Reiblamellenpaket, **dadurch gekennzeichnet, dass**
der Ausgangsflansch (901) des Drehschwingungsdämpfers eine Innenverzahnung (901 b) und der Kupplungskorb (904) der Kupplungseinrichtung eine Außenverzahnung (904a) aufweisen, die gemeinsam eine axiale Steckverzahnung zur Übertragung des Drehmomentes zwischen Antrieb und Getriebe bilden, wobei der Kupplungskorb (904) auf der Kupplungsnabe (208) radial abgestützt, sowie axial verlagerbar und in Umfangsrichtung verdrehbar ist, wobei der Eingangsflansch (900) mit der Kupplungsnabe (208) fest verbunden ist.

2. Drehmomentübertragungseinrichtung nach Anspruch 1, mit einer Federeinrichtung, die zwischen Eingangsflansch und Ausgangsflansch des Drehschwingungsdämpfers angeordnet ist und diese in der Weise verspannt, dass keine Kraftwirkung in axialer Richtung auf die Kupplungseinrichtung entsteht.

3. Drehmomentübertragungseinrichtung nach Anspruch 1, wobei die Kupplungsnabe über eine Lagerungseinrichtung, wie ein Nadellager oder eine Gleitbüchse, an einer Getriebeeingangswelle in radialer Richtung abgestützt ist und/oder wobei eine Ausgangsseite der Kupplungseinrichtung an der Kupplungsnabe über ein axial wirkendes Lager, wie Nadellager oder Anlaufscheibe, abgestützt ist, und wobei die Ausgangsseite über eine Vorspanneinrichtung, wie Federeinrichtung, insbesondere ein Wellring, axial an einer Getriebeeingangswelle abgestützt ist.

4. Drehmomentübertragungseinrichtung nach einem der Ansprüche 1 bis 3, wobei die Außenverzahnung der axialen Steckverbindung des Eingangskorbs der Kupplungseinrichtung in einem spanlosen Umformverfahren hergestellt ist.

5. Drehmomentübertragungseinrichtung nach einem der Ansprüche 1 bis 4, wobei der Drehschwingungsdämpfer und die Kupplungseinrichtung zumindest teilweise ineinander geschachtelt ausgebildet sind, indem der Ausgangsflansch des Drehschwingungsdämpfers in axialer Richtung derart ausgeformt ist, dass dieser die Kupplungseinrichtung in axialen Richtung die Kupplungseinrichtung zumindest teilweise umgreift.

6. Drehmomentübertragungseinrichtung nach einem der Ansprüche 1 bis 5, mit einer hydraulischen oder pneumatischen Betätigungseinheit zur Betätigung der Kupplungseinrichtung, welche über ein Deckellager an die Kupplung angebunden ist, wobei ein Gehäuse der Betätigungseinheit radial am Getriebegehäuse abgestützt und über eine Verspanneinrichtung axial an das Getriebegehäuse angedrückt ist.

7. Drehmomentübertragungseinrichtung nach einem der Ansprüche 1 bis 6, wobei die Kupplungseinrichtung als Doppelkupplung mit zwei Einzelkupplungen ausgebildet ist, und wobei ein Eingangskorb einer der Einzelkupplungen die Außenverzahnung aufweist, die gemeinsam mit der Innenverzahnung des Ausgangsflansches des Drehschwingungsdämpfers die axiale Steckverzahnung zur Übertragung des Drehmomentes zwischen Antrieb und Getriebe bildet.

8. Drehmomentübertragungseinrichtung nach Anspruch 7, wobei der Kupplungskorb der Doppelkupplung auf der Kupplungsnabe in radialer Richtung und in Umfangsrichtung drehbar abgestützt ist.

9. Antriebstrang eines Fahrzeuges mit einem Antrieb, einer Drehmomentübertragungseinrichtung nach einem der Ansprüche 2 bis 8, wobei eine Flexplate und/oder eine Driveplate als Antriebsverbindung zwischen einer Antriebswelle der Antriebseinheit und der Drehmomentübertragungseinrichtung, insbesondere dem Drehschwingungsdämpfer, vorgesehen ist/sind, und wobei die Flexplate oder die Driveplate, insbesondere über eine Schraub- oder Niet- oder Schweißverbindung, mit der Anschlußnabe verbunden ist.

## Claims

1. Torque transmission device in a drive train of a vehicle for transmitting a torque between a drive, such as an internal combustion engine or electric motor, and a transmission, such as a double clutch transmission, with a clutch hub (208), the clutch hub (208) being rotationally connected indirectly or directly to the drive, and with a torsional vibration damper, such as a two-mass flywheel, arranged in the wet space and with an input flange (900) and output flange (901) and a damping device (903) arranged between these, and with a clutch device, such as a wet-running double clutch device, in particular with radially nested individual clutches, with a clutch cage (904) and an output side and with a friction disc stack arranged between these, **characterized in that** the output flange (901) of the torsional vibration damper has an internal toothing (901b) and the clutch cage (904) of the clutch device has an external toothing (904a), which together form an axial spline-type gearing for transmitting the torque between the drive and transmission, the clutch cage (904) being supported radially on the clutch hub (208) and being displaceable axially and rotatable in the circumferential direction, the input flange (900) being connected firmly to the clutch hub (208).

2. Torque transmission device according to Claim 1, with a spring device which is arranged between the input flange and output flange of the torsional vibration damper and which braces these in such a way that no action of force in the axial direction upon the clutch device occurs.

3. Torque transmission device according to Claim 1, the clutch hub being supported in the radial direction on a transmission input shaft via a mounting device, such as a needle bearing or sliding bush, and/or an output side of the clutch device being supported on the clutch hub via an axially acting bearing, such as a needle bearing or run-on disc, and the output side being supported axially on a transmission input shaft via a prestressing device, such as a spring device, in particular a corrugated ring.

4. Torque transmission device according to one of Claims 1 to 3, the external toothing of the axial plug connection of the input cage of the clutch device being produced by a non-cutting forming method.

5. Torque transmission device according to one of Claims 1 to 4, the torsional vibration damper and the clutch device being designed to be at least partially nested one in the other, in that the output flange of the torsional vibration damper is shaped in the axial direction in such a way that it at least partially surrounds the clutch device in the axial direction.

6. Torque transmission device according to one of Claims 1 to 5, with a hydraulic or pneumatic actuation unit for actuating the clutch device, which actuation unit is tied to the clutch via a cover bearing, a housing of the actuation unit being supported radially on the transmission housing and being pressed axially onto the transmission housing via a bracing device.

7. Torque transmission device according to one of Claims 1 to 6, the clutch device being designed as a double clutch with two individual clutches, and an input cage of one of the individual clutches having the external toothing which, together with the internal toothing of the output flange of the torsional vibration damper, forms the axial spline-type gearing for transmitting the torque between the drive and transmission.

8. Torque transmission device according to Claim 7, the clutch cage of the double clutch being supported on the clutch hub rotatably in the radial direction and in the circumferential direction.

9. Drive train of a vehicle with a drive of torque transmission device according to one of Claims 2 to 8, a flexplate and/or a driveplate being provided as a drive connection between a drive shaft of the drive unit and the torque transmission device, in particular the torsional vibration damper, and the flexplate or the driveplate being connected to the connecting hub, in particular, via a screw connection or a riveted joint or a welded joint.

## Revendications

1. Dispositif de transfert de couple dans une chaîne cinématique d'un véhicule pour le transfert d'un couple entre un entraînement, tel qu'un moteur à combustion interne ou un moteur électrique, et une transmission, telle qu'une transmission à double embrayage, comprenant un moyeu d'embrayage (208), le moyeu d'embrayage (208) étant connecté en rotation de manière indirecte ou directe à l'entraînement et
un amortisseur d'oscillations disposé dans l'espace humide, tel qu'un volant d'inertie à deux masses, avec une bride d'entrée (900) et une bride de sortie (901) et un dispositif d'amortissement (903) disposé entre elles et
un dispositif d'embrayage, tel qu'un dispositif à double embrayage humide, en particulier avec des embrayages individuels emboîtés radialement, avec une cloche d'embrayage (904) et un côté de sortie et un paquet de disques de friction disposé entre ceux-ci, **caractérisé en ce que**
la bride de sortie (901) de l'amortisseur d'oscillations présente une denture intérieure (901b) et la cloche d'embrayage (904) du dispositif d'embrayage présente une denture extérieure (904a), lesquelles forment conjointement une denture enfichable axiale pour le transfert du couple entre l'entraînement et la transmission, la cloche d'embrayage (904) s'appuyant radialement sur le moyeu d'embrayage (208), pouvant être décalée axialement et pouvant tourner dans la direction périphérique, la bride d'entrée (900) étant connectée fixement au moyeu d'embrayage (208).

2. Dispositif de transfert de couple selon la revendication 1, comprenant un dispositif de ressort, qui est disposé entre la bride d'entrée et la bride de sortie de l'amortisseur d'oscillations et qui précontraint celles-ci de manière à ce qu'aucune force ne s'exerce dans la direction axiale sur le dispositif d'embrayage.

3. Dispositif de transfert de couple selon la revendication 1, dans lequel le moyeu d'embrayage est supporté dans la direction radiale par le biais d'un dispositif de support sur palier, tel qu'un palier à aiguilles ou un manchon coulissant, sur un arbre d'entrée de la transmission et/ou dans lequel un côté de sortie du dispositif d'embrayage est supporté au niveau du moyeu d'embrayage par le biais d'un palier agissant axialement, tel qu'un palier à aiguilles ou un disque de butée, et dans lequel le côté de sortie est supporté axialement contre un arbre d'entrée de la transmission par le biais d'un dispositif de précontrainte, tel qu'un dispositif de ressort, en particulier une bague ondulée.

4. Dispositif de transfert de couple selon l'une quelconque des revendications 1 à 3, dans lequel la denture extérieure de la connexion enfichable axiale de la cloche d'entrée du dispositif d'embrayage est fabriquée par un procédé de formage sans enlèvement de copeaux.

5. Dispositif de transfert de couple selon l'une quelconque des revendications 1 à 4, dans lequel l'amortisseur d'oscillations et le dispositif d'embrayage sont réalisés de manière au moins partiellement emboîtée l'un dans l'autre, la bride de sortie de l'amortisseur d'oscillations étant formée dans la direction axiale de telle sorte qu'elle vienne en prise au moins en partie autour du dispositif d'embrayage dans la direction axiale.

6. Dispositif de transfert de couple selon l'une quelconque des revendications 1 à 5, comprenant une unité d'actionnement hydraulique ou pneumatique pour l'actionnement du dispositif d'embrayage, qui est reliée par le biais d'un palier à chapeau à l'embrayage, un boîtier de l'unité d'actionnement étant supporté radialement sur le boîtier de transmission et étant pressé axialement contre le boîtier de transmission par le biais d'un dispositif de serrage.

7. Dispositif de transfert de couple selon l'une quelconque des revendications 1 à 6, dans lequel le dispositif d'embrayage est réalisé sous forme de double embrayage avec deux embrayages individuels, et dans lequel une cloche d'entrée de l'un des embrayages individuels présente la denture extérieure qui forme, conjointement avec la denture intérieure de la bride de sortie de l'amortisseur d'oscillations, la denture enfichable axiale pour le transfert du couple entre l'entraînement et la transmission.

8. Dispositif de transfert de couple selon la revendication 7, dans lequel la cloche d'embrayage du double embrayage est supportée de manière rotative sur le moyeu d'embrayage dans la direction radiale et dans la direction périphérique.

9. Chaîne cinématique d'un véhicule comprenant un entraînement, un dispositif de transfert de couple selon l'une quelconque des revendications 2 à 8, dans laquelle un disque flexible et/ou un disque d'entraînement est/sont prévu(s) en tant que liaison d'entraînement entre un arbre d'entraînement de l'unité d'entraînement et le dispositif de transfert de couple, en particulier l'amortisseur d'oscillations, et dans laquelle le disque flexible ou le disque d'entraînement est connecté au moyeu de raccordement notamment par le biais d'une liaison par vissage ou par rivetage ou par soudage.
